# EUROPEAN PATENT SPECIFICATION

(11) **EP 4 266 742 B1**
(45) Date of publication and mention of the grant of the patent: **26.11.2025**
(21) Application number: 21918955.2
(22) Date of filing: 27.09.2021
(51) Int. Cl.: H04L 1/1867, H04L 1/1829, H04W 28/16, H04L 5/00

(54) **PDCCH REPETITION TRANSMISSION CONFIGURATION METHOD AND RELATED APPARATUS**
KONFIGURATIONSVERFAHREN FÜR PDCCH-WIEDERHOLUNGSÜBERTRAGUNG UND ZUGEHÖRIGE VORRICHTUNG
PROCÉDÉ DE CONFIGURATION DE TRANSMISSION DE RÉPÉTITION DE PDCCH ET APPAREIL ASSOCIÉ

(30) Priority: 15.01.2021 WO PCT/CN2021/072132
(43) Date of publication of application: 25.10.2023
(73) Proprietor: Huawei Technologies Co., Ltd., Shenzhen, Guangdong 518129 (CN)
(72) Inventor: JIAO, Shurong, Shenzhen, Guangdong 518129 (CN); GAO, Fei, Shenzhen, Guangdong 518129 (CN); HUA, Meng, Shenzhen, Guangdong 518129 (CN); GUAN, Lei, Shenzhen, Guangdong 518129 (CN)
(74) Representative: MERH-IP Matias Erny Reichl Hoffmann Patentanwälte PartG mbB
(86) International application number: PCT/CN2021/121018
(87) International publication number: WO 2022/151764

(56) References cited:
- WO-A1-2015/018096
- WO-A1-2018/137517
- WO-A1-2020/085813
- CN-A- 109 792 372
- CN-A- 111 886 826
- US-A1- 2016 150 539
- US-A1- 2020 022 144

## Description

This application claims priority to Chinese Patent Application No. PCT/CN2021/072132, filed with the China National Intellectual Property Administration on January 15, 2021 and entitled "PDCCH REPETITION TRANSMISSION CONFIGURATION METHOD AND RELATED APPARATUS".

### TECHNICAL FIELD

This application relates to the field of communication technologies, and in particular, to a physical downlink control channel (physical downlink control channel, PDCCH) repetition transmission configuration method and a related apparatus.

### BACKGROUND

Currently, in a 5th generation (5th-generation, 5G) mobile communication new radio (new radio, NR) system, a network side uses a physical downlink control channel (physical downlink control channel, PDCCH) to carry scheduling information of uplink and/or downlink data. In addition, the network side uses a physical downlink data channel (physical downlink shared channel, PDSCH)/a physical uplink data channel (physical uplink shared channel, PUSCH) corresponding to the scheduling information to carry the downlink/uplink data and sends the PDCCH to a user. After receiving the PDCCH, the user may parse out the scheduling information of the uplink and/or downlink data, and perform data transmission on the corresponding PDSCH/PUSCH based on the scheduling information. The network side further uses the PDCCH to carry some common control information, for example, power control information and uplink and downlink format information of a time division duplex mode. The scheduling information and the common control information are collectively referred to as downlink control information (downlink control information, DCI).

The network side may use a PDCCH repetition (PDCCH repetition) transmission technology to improve receiving performance of the PDCCH. There is a plurality of manners for PDCCH repetition transmission, and same DCI may be sent for a plurality of times at different time points, at different frequencies, or through different beams, to obtain a diversity gain and/or a combination gain. In addition, the network side may simultaneously send a same PDCCH to one terminal device by using a plurality of sending stations. This is equivalent to sending same DCI for a plurality of times through different beams. The plurality of sending stations herein may be referred to as multiple transmission points (multiple transmission points, M-TRP). For the PDCCH repetition (PDCCH repetition) transmission, the terminal device has a plurality of receiving manners. For example, when performing receiving, the terminal device may perform independent decoding on a single PDCCH candidate (PDCCH candidate), or may perform combination and then decoding on a plurality of repetitively transmitted PDCCH candidates.

However, for the PDCCH repetition transmission in a time division multiplexing (Time-division multiplexing, TDM) manner, in other words, when a same PDCCH is sent for a plurality of times at different time points, if the terminal device wants to perform combination and decoding, the terminal device needs to store several previously received PDCCH candidates, so that the terminal device performs combination and decoding after receiving a PDCCH candidate sent last time. Therefore, if the PDCCH repetition transmission is performed in the TDM manner, a higher requirement is imposed on a storage procedure and a receiving procedure of the terminal device. How to enable the terminal device to support the combination and decoding when the PDCCH repetition transmission is performed in the TDM manner becomes an urgent problem to be resolved.

US2020/022144A1 discloses a method of operating a UE to transmit a physical uplink shared channel, PUSCH, including receiving a configuration for a number of bits for a field that indicates a parameter in a first downlink control information, DCI, format, receiving a physical downlink control channel, PDCCH, that provides either the first DCI format scheduling the PUSCH or a second DCI format scheduling the PUSCH, and transmitting the PUSCH. The second DCI format includes a field with a predetermined number of bits that indicates the parameter. A minimum number of bits for the field in the first DCI format is smaller than the predetermined number of bits for the field in the second DCI format.

US2016/150539A1 discloses an information transmitting apparatus comprising an information transmitting unit configured to repeatedly transmit control information over multiple subframes.

Therein, a PDCCH or an enhanced physical downlink control channel, EPDCCH, is transmitted by using one of candidate paths constituted by PDCCH or EPDCCH candidates carrying the control information over different subframes.

WO2018/137517A1 discloses a method for transmitting signals comprising allocating all control channel elements, CCEs, of a PDCCH candidate to an orthogonal frequency division multiplexing ,OFDM, symbol and transmitting a PDCCH using the PDCCH candidate on the OFDM symbol.

### SUMMARY

The present invention is defined by the independent claims. In the following, parts of the description and drawings referring to examples which do not necessarily comprise all features of the invention as currently claimed are not represented as embodiments of the invention but as examples useful for understanding the embodiments of the invention. Embodiments of this application provide a PDCCH repetition transmission configuration method and a related apparatus. A terminal device may be supported to perform combination and decoding, and when the PDCCH repetition transmission is performed in a TDM manner, a combination gain is obtained and complexity of the terminal device is reduced.

The following describes this application from different aspects. It should be understood that mutual reference may be made to the following implementations and beneficial effects of the different aspects.

According to a first aspect, this application provides a PDCCH repetition transmission configuration method according to appended independent claim 1. The method includes: A terminal device receives a first message, and parses the first message. The first message includes a configuration that is related to PDCCH repetition transmission, and the configuration that is related to the PDCCH repetition transmission is for determining M groups of PDCCH candidate sequences. Each group of PDCCH candidate sequences includes K PDCCH candidates, and the K PDCCH candidates are for sending same downlink control information. The K PDCCH candidates included in each group of PDCCH candidate sequences are separately located on different symbols. In other words, the K PDCCH candidates in the group of PDCCH candidate sequences are separately transmitted at different time points. In other words, the K PDCCH candidates are sent in a TDM manner. M is a positive integer, and K is an integer greater than 1. The PDCCH candidate in the M groups of PDCCH candidate sequences meets a first condition. The first condition may be preset, for example, specified a standard protocol, or may be determined based on a capability reported by the terminal device.

It may be learned that in this solution, the PDCCH candidate in the M groups of PDCCH candidate sequences configured by a network device for the terminal device is restricted to meet the first condition. The terminal device is supported to perform combination and decoding, and when the PDCCH repetition transmission is performed in a TDM manner, a combination gain is obtained and complexity of the terminal device is reduced.

With reference to the first aspect, in a possible implementation, before the terminal device receives the first message, the method further includes: The terminal device sends a second message. The second message includes a capability that is supported by the terminal device and that is related to the PDCCH repetition transmission, and the capability that is supported by the terminal device and that is related to the PDCCH repetition transmission is for determining the first condition.

Optionally, the capability that is supported by the terminal device and that is related to the PDCCH repetition transmission includes one or more of the following: A time interval between a plurality of PDCCH candidates is a first value, and is for determining a time interval between the K PDCCH candidates of each group of PDCCH candidate sequences in the M groups of PDCCH candidate sequences; a size of a time window is a first value, and is for determining a size of a time window of each group of PDCCH candidate sequences; a quantity of CCEs corresponding to each group of PDCCH candidate sequences is a second value, and is for determining that a quantity of CCEs corresponding to first K-1 PDCCH candidates in each group of PDCCH candidate sequences does not exceed the second value; a value of M is a third value, and is for determining that a quantity of groups of PDCCH candidate sequences does not exceed the third value; a total quantity of CCEs corresponding to a plurality of groups of PDCCH candidate sequences is a fourth value, and is for determining that a total quantity of CCEs corresponding to the M groups of PDCCH candidate sequences does not exceed the fourth value; a quantity of groups of PDCCH candidate sequences located in a same slot is a fifth value, and is for determining that a quantity of groups of PDCCH candidate sequences located on the same slot in the M groups of PDCCH candidate sequences does not exceed the fifth value; and a quantity of groups of PDCCH candidate sequences that simultaneously occupy a storage resource is a sixth value, and is for determining that a quantity of groups of PDCCH candidate sequences that simultaneously occupy a storage resource in the M groups of PDCCH candidate sequences does not exceed the sixth value.

It may be learned that in this solution, a capability of the terminal device is reported, so that the network device configures, based on the capability of the terminal device, the PDCCH candidate sequences for repetition transmission. This meets a requirement of the terminal device and reduces complexity of the terminal device. In addition, the terminal device may be supported to perform combination and decoding, and a combination gain brought by PDCCH repetition transmission is obtained.

According to a second aspect, this application provides a PDCCH repetition transmission configuration method according to appended independent claim 2.

The method includes: A network device generates and sends a first message. The first message includes a configuration that is related to PDCCH repetition transmission, and the configuration that is related to the PDCCH repetition transmission is for determining M groups of PDCCH candidate sequences. Each group of PDCCH candidate sequences includes K PDCCH candidates, and the K PDCCH candidates are for sending same downlink control information. The K PDCCH candidates included in each group of PDCCH candidate sequences are separately located on different symbols. In other words, the K PDCCH candidates in the group of PDCCH candidate sequences are separately transmitted at different time points. In other words, the K PDCCH candidates are sent in a TDM manner. M is a positive integer, and K is an integer greater than 1. The PDCCH candidate in the M groups of PDCCH candidate sequences meets a first condition. The first condition may be preset, for example, specified a standard protocol, or may be determined based on a capability reported by the terminal device.

With reference to the second aspect, in a possible implementation, before the network device generates the first message, the method further includes: The network device receives a second message. The second message includes a capability that is supported by the terminal device and that is related to the PDCCH repetition transmission, and the capability that is supported by the terminal device and that is related to the PDCCH repetition transmission is for determining the first condition.

Optionally, the capability that is supported by the terminal device and that is related to the PDCCH repetition transmission includes one or more of the following: A time interval between a plurality of PDCCH candidates is a first value, and is for determining a time interval between the K PDCCH candidates of each group of PDCCH candidate sequences in the M groups of PDCCH candidate sequences; a size of a time window is a first value, and is for determining a size of a time window of each group of PDCCH candidate sequences; a quantity of CCEs corresponding to each group of PDCCH candidate sequences is a second value, and is for determining that a quantity of CCEs corresponding to first K-1 PDCCH candidates in each group of PDCCH candidate sequences does not exceed the second value; a value of M is a third value, and is for determining that a quantity of groups of PDCCH candidate sequences does not exceed the third value; a total quantity of CCEs corresponding to a plurality of groups of PDCCH candidate sequences is a fourth value, and is for determining that a total quantity of CCEs corresponding to the M groups of PDCCH candidate sequences does not exceed the fourth value; a quantity of groups of PDCCH candidate sequences located in a same slot is a fifth value, and is for determining that a quantity of groups of PDCCH candidate sequences located in the same slot in the M groups of PDCCH candidate sequences does not exceed the fifth value; and a quantity of groups of PDCCH candidate sequences that simultaneously occupy a storage resource is a sixth value, and is for determining that a quantity of groups of PDCCH candidate sequences that simultaneously occupy a storage resource in the M groups of PDCCH candidate sequences does not exceed the sixth value.

According to a third aspect, this application provides a communication apparatus according to appended independent claim 8. The communication apparatus may be a terminal device, or may be a chip in a terminal device. The communication apparatus includes: a transceiver unit, configured to receive a first message, where the first message includes a configuration that is related to PDCCH repetition transmission, the configuration that is related to the PDCCH repetition transmission is for determining M groups of PDCCH candidate sequences, each group of PDCCH candidate sequences includes K PDCCH candidates, the K PDCCH candidates are for sending same downlink control information, the K PDCCH candidates included in each group of PDCCH candidate sequences are separately located on different symbols, M is a positive integer, K is an integer greater than 1, a PDCCH candidate in the M groups of PDCCH candidate sequences meets a first condition, and a parsing unit, configured to parse the first message.

With reference to the third aspect, in a possible implementation, the transceiver unit is further configured to send a second message. The second message includes a capability that is supported by the communication apparatus and that is related to the PDCCH repetition transmission, and the capability that is supported by the communication apparatus and that is related to the PDCCH repetition transmission is for determining the first condition.

Optionally, the capability that is supported by the communication apparatus and that is related to the PDCCH repetition transmission includes one or more of the following: A time interval between a plurality of PDCCH candidates is a first value, and is for determining a time interval between the K PDCCH candidates of each group of PDCCH candidate sequences in the M groups of PDCCH candidate sequences; a size of a time window is a first value, and is for determining a size of a time window of each group of PDCCH candidate sequences; a quantity of CCEs corresponding to each group of PDCCH candidate sequences is a second value, and is for determining that a quantity of CCEs corresponding to first K-1 PDCCH candidates in each group of PDCCH candidate sequences does not exceed the second value; a value of M is a third value, and is for determining that a quantity of groups of PDCCH candidate sequences does not exceed the third value; a total quantity of CCEs corresponding to a plurality of groups of PDCCH candidate sequences is a fourth value, and is for determining that a total quantity of CCEs corresponding to the M groups of PDCCH candidate sequences does not exceed the fourth value; a quantity of groups of PDCCH candidate sequences located in a same slot is a fifth value, and is for determining that a quantity of groups of PDCCH candidate sequences located in the same slot in the M groups of PDCCH candidate sequences does not exceed the fifth value; and a quantity of groups of PDCCH candidate sequences that simultaneously occupy a storage resource is a sixth value, and is for determining that a quantity of groups of PDCCH candidate sequences that simultaneously occupy a storage resource in the M groups of PDCCH candidate sequences does not exceed the sixth value.

With reference to the third aspect, in a possible implementation, the transceiver unit is further configured to receive a second message. The second message includes a capability that is supported by the terminal device and that is related to PDCCH repetition transmission, and the capability that is supported by the terminal device and that is related to the PDCCH repetition transmission is for determining the first condition.

Optionally, the capability that is supported by the terminal device and that is related to the PDCCH repetition transmission includes one or more of the following: A time interval between a plurality of PDCCH candidates is a first value, and is for determining a time interval between the K PDCCH candidates of each group of PDCCH candidate sequences in the M groups of PDCCH candidate sequences; a size of a time window is a first value, and is for determining a size of a time window of each group of PDCCH candidate sequences; a quantity of CCEs corresponding to each group of PDCCH candidate sequences is a second value, and is for determining that a quantity of CCEs corresponding to first K-1 PDCCH candidates in each group of PDCCH candidate sequences does not exceed the second value; a value of M is a third value, and is for determining that a quantity of groups of PDCCH candidate sequences does not exceed the third value; a total quantity of CCEs corresponding to a plurality of groups of PDCCH candidate sequences is a fourth value, and is for determining that a total quantity of CCEs corresponding to the M groups of PDCCH candidate sequences does not exceed the fourth value; a quantity of groups of PDCCH candidate sequences located in a same slot is a fifth value, and is for determining that a quantity of groups of PDCCH candidate sequences located in the same slot in the M groups of PDCCH candidate sequences does not exceed the fifth value; and a quantity of groups of PDCCH candidate sequences that simultaneously occupy a storage resource is a sixth value, and is for determining that a quantity of groups of PDCCH candidate sequences that simultaneously occupy a storage resource in the M groups of PDCCH candidate sequences does not exceed the sixth value.

In an implementation of any one of the foregoing aspects, the first condition includes: The time interval between the K PDCCH candidates in each group of PDCCH candidate sequences is less than or equal to the first value. The first value may be a positive infinity. In other words, the time interval between the K PDCCH candidates in each group of PDCCH candidate sequences may be any value. In other words, there is no additional requirement on time intervals between a plurality of repetition transmissions of a same PDCCH. This is supported by the terminal device. Alternatively, the first value may be a preset value or a time interval value reported by the terminal device. In other words, the time interval between the K PDCCH candidates in each group of PDCCH candidate sequences is less than or equal to a fixed value. In other words, the time interval between a plurality of repetition transmissions of a same PDCCH are less than or equal to a fixed value.

Optionally, the time interval between the K PDCCH candidates in each group of PDCCH candidate sequences is a time interval between a start symbol of a PDCCH candidate transmitted for the 1^{st} time in the K PDCCH candidates and an end symbol of a PDCCH candidate transmitted for the K^{th} time (or the last time). One PDCCH candidate occupies one or more symbols.

Optionally, the time interval between the K PDCCH candidates in each group of PDCCH candidate sequences is a time interval between a start symbol of a PDCCH candidate transmitted for the i^{th} time in the K PDCCH candidates and an end symbol of a PDCCH candidate transmitted for the (i+1)^{th} time. A value range of i is an interval [1, K-1], and one PDCCH candidate occupies one or more symbols.

Optionally, the time interval between the K PDCCH candidates in each group of PDCCH candidate sequences is a time interval between a start symbol of a PDCCH candidate transmitted for the 1^{st} time in the K PDCCH candidates and a start symbol of a PDCCH candidate transmitted for the K^{th} time (or the last time). One PDCCH candidate occupies one or more symbols.

Optionally, the time interval between the K PDCCH candidates in each group of PDCCH candidate sequences is a time interval between a start symbol of a PDCCH candidate transmitted for the i^{th} time in the K PDCCH candidates and a start symbol of a PDCCH candidate transmitted for the (i+1)^{th} time. A value range of i is an interval [1, K-1], and one PDCCH candidate occupies one or more symbols.

In an implementation of any one of the foregoing aspects, the first condition includes: The K PDCCH candidates in each group of PDCCH candidate sequences are located in one time window, a size of the time window is equal to the first value, and a start symbol of the time window is preset.

It may be learned that in this solution, the time interval between the K PDCCH candidates in each group of PDCCH candidate sequences is restricted or the K PDCCH candidates are restricted to be located in the one time window, to ensure that after the terminal device subsequently receives a plurality of PDCCH candidates, a total quantity of resources corresponding to a PDCCH candidate to be stored does not exceed a value obtained by multiplying a length of the time window by a quantity of bandwidth symbols.

In an implementation of any one of the foregoing aspects, the first condition includes: A quantity of control channel elements CCEs corresponding to first K-1 PDCCH candidates in each group of PDCCH candidate sequences is less than or equal to the second value, and one PDCCH candidate includes one or more CCEs. The second value is a preset value or a quantity of CCEs reported by the terminal device.

In an implementation of any one of the foregoing aspects, the first condition includes: M is less than or equal to the third value. The third value is a preset value or a value reported by the terminal device.

In an implementation of any one of the foregoing aspects, the total quantity of CCEs corresponding to the M groups of PDCCH candidate sequences is less than or equal to the fourth value, and one PDCCH candidate includes one or more CCEs. The fourth value is a preset value or a maximum quantity of CCEs that can be stored and reported by the terminal device.

Optionally, the total quantity of CCEs corresponding to the M groups of PDCCH candidate sequences is a sum of a quantity of CCEs corresponding to all PDCCH candidates included in the M groups of PDCCH candidate sequences.

Optionally, the total quantity of CCEs corresponding to the M groups of PDCCH candidate sequences is a sum of a quantity of CCEs corresponding to each group of PDCCH candidate sub-sequences in the M groups of PDCCH candidate sequences. A PDCCH candidate sub-sequence includes the first K-1 PDCCH candidates in a PDCCH candidate sequence. In other words, the total quantity of CCEs corresponding to the M groups of PDCCH candidate sequences is a sum of a quantity of CCEs corresponding to M groups of PDCCH candidate sub-sequences.

It may be learned that in this solution, a quantity of PDCCH candidates included in the PDCCH candidate sequences or a quantity of CCEs corresponding to the PDCCH candidate sequences configured by the network device is restricted, to ensure that a quantity of PDCCH candidates to be stored or a quantity of CCEs to be stored by the terminal device does not exceed an upper limit (which is a storage capability of the terminal device).

In an implementation of any one of the foregoing aspects, the first condition includes: there are N groups of PDCCH candidate sequences that are located in a same slot and that are in the M groups of PDCCH candidate sequences, N is a positive integer, N is less than or equal to M, and N is less than or equal to the fifth value.

In an implementation of any one of the foregoing aspects, the first condition includes: there are O groups of PDCCH candidate sequences that simultaneously occupy a storage resource and that are in the M groups of PDCCH candidate sequences, O is a positive integer, O is less than or equal to M, and O is less than or equal to a sixth value.

According to another aspect, this application provides a computer readable-storage medium according to appended independent claim 10. The computer-readable storage medium stores program instructions, and when the program instructions are run on a computer, the computer is enabled to perform the PDCCH repetition transmission configuration method described in any one of the first aspect, the second aspect.

According to another aspect, this application provides a program product according to appended independent claim 9. When the program instructions are run, the PDCCH repetition transmission configuration method described in any one of the first aspect, the second aspect is performed. Further advantageous embodiments of the invention are set out in the appended dependent claims.

### BRIEF DESCRIPTION OF DRAWINGS

FIG. 1 is a schematic diagram of a search space;
FIG. 2 is a schematic architectural diagram of a mobile communication system according to an embodiment of this application;
FIG. 3 is a schematic flowchart of a PDCCH repetition transmission configuration method according to an embodiment of this application;
FIG. 4 is a schematic diagram of a time interval between K PDCCH candidates according to an embodiment of this application;
FIG. 5 is a schematic diagram of a time interval between PDCCH candidates in a plurality of groups of PDCCH candidate sequences according to an embodiment of this application;
FIG. 6 is another schematic diagram of a time interval between K PDCCH candidates according to an embodiment of this application;
FIG. 7 is a schematic diagram of time windows according to an embodiment of this application;
FIG. 8 is a schematic diagram of two groups of PDCCH candidate sequences according to an embodiment of this application;
FIG. 9 is a schematic diagram of three groups of PDCCH candidate sequences according to an embodiment of this application;
FIG. 10 is a schematic diagram of a time when a group of PDCCH candidate sequence occupies a storage resource according to an embodiment of this application;
FIG. 11 is another schematic flowchart of a PDCCH repetition transmission configuration method according to an embodiment of this application;
FIG. 12 is a schematic diagram of a structure of a communication apparatus 1 according to an embodiment of this application;
FIG. 13 is a schematic diagram of a structure of a communication apparatus 2 according to an embodiment of this application; and
FIG. 14 is a schematic diagram of a structure of a communication apparatus 1000 according to an embodiment of this application.

### DESCRIPTION OF EMBODIMENTS

The following clearly and completely describes technical solutions in embodiments of this application with reference to the accompanying drawings in embodiments of this application.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one (item)" means one (item) or more (items), and "a plurality of" means to two (items) or more (items). Terms such as "first" and "second" do not limit a quantity and an execution sequence, and the terms such as "first" and "second" do not indicate a definite difference.

In this application, the word such as "example" or "for example" is for representing giving an example, an illustration, or a description. Any embodiment or design solution described by using "example" or "for example" in this application shall not be construed as being more preferred or having more advantages than another embodiment or design solution. Exactly, use of the word such as "example" or "for example" is intended to present a relative concept in a specific manner.

To facilitate understanding of technical solutions in this application, the following briefly describes meanings of some terms (nouns) in embodiments of this application.

### 1. Physical downlink control channel (physical downlink control channel, PDCCH)

The PDCCH carries scheduling and other control information, specifically including a transmission format, resource preemption, an uplink scheduling grant/a downlink scheduling grant, power control, uplink retransmission information, and the like. The PDCCH is a set of physical resource elements, and carries downlink control information (DCI), including resource allocation and other control information on one or more terminal devices.

One PDCCH includes one or several control channel elements (control channel elements, CCEs), and the CCEs are interleaved in a system range to perform interference randomization. One CCE occupies six resource element groups (resource element groups, REGs) in frequency domain. One REG occupies 12 resource elements (resource elements, REs). In this case, one CCE occupies 72 REs.

### 2. Downlink control information (downlink control information, DCI)

The DCI is carried on a PDCCH, and is downlink control information sent by a network device to a terminal device, including uplink and downlink resource allocation, automatic repeat request (hybrid automatic repeat request, HARQ) information, power control, and the like. One DCI corresponds to one PDCCH, or content transmitted on one PDCCH is referred to as the DCI.

### 3. Control resource set (control resource set, CORESET)

The control resource set is a concept newly proposed in NR, and may be understood as a time-frequency resource set. In time domain, one CORESET may be configured as one or several consecutive OFDM symbols. In frequency domain, one CORESET may be a group of consecutive or non-consecutive frequency domain resources, including search spaces at different aggregation levels. One CORESET is configured through higher layer signaling, including the following content: an ID index of the CORESET, an initialization value of a demodulation reference signal (demodulation reference signal, DM-RS) scrambling sequence, duration of the CORESET, a bitmap (bitmap) of a CORESET frequency domain resource, a CCE-to-REG mapping type (including non-interleaved CCE-to-REG mapping (non-interleaved CCE-to-REG mapping) and interleaved CCE-to-REG mapping (interleaved CCE-to-REG mapping)), a size of an REG bundle (REG bundle), a cyclic shift value of an REG bundle interleaver, a quasi co-location (Quasi co-location, QCL) relationship with an antenna port, and an indication indicating whether a transmission configuration indicator (transmission configuration indicator, TCI) field exists in DCI.

### 4. Search space (search space)

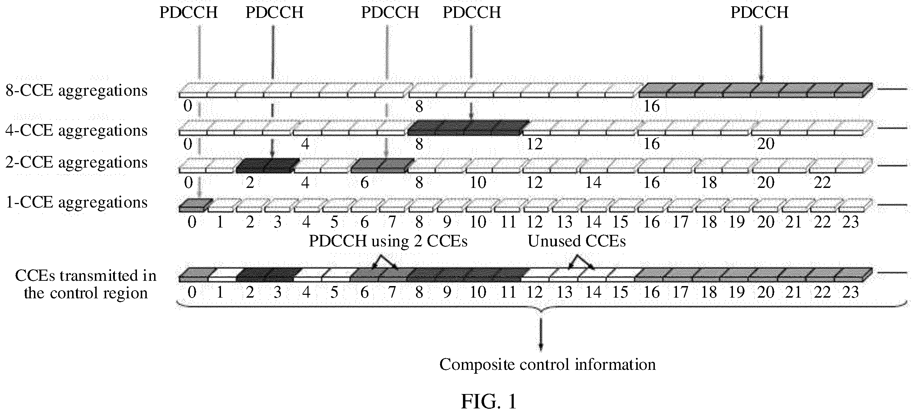

The search space is a set of PDCCH candidates (PDCCH candidates) at one given aggregation level in one CORESET. FIG. 1 is a schematic diagram of a search space. FIG. 1 separately shows search spaces at different aggregation levels. A total quantity of PDCCH candidates in one search space may be calculated based on an aggregation level of the search space and a quantity of the PDCCH candidates at the aggregation level. In NR, a set of PDCCH candidates corresponding to a same aggregation level (aggregation level, AL) is usually referred to as a search space (search space). A sum of search spaces corresponding to a plurality of ALs is referred to as a search space set (search space set).

The search space may include two types: a common search space (common search space, CSS) and a UE-specific search space (UE-specific search space, USS). The common search space is a search space for detecting common control information. The UE-specific search space is a search space for detecting UE-specific control information.

### 5. PDCCH candidate (PDCCH candidate)

A quantity of PDCCH candidates at each aggregation level is specified in a standard protocol, in other words, a place in which a PDCCH may occur at each aggregation level is specified in a standard protocol. A UE-specific search space is used as an example. It is assumed that an aggregation level of a CCE is 1, and one CCE is read from a start position of the UE-specific search space. The one CCE is one PDCCH candidate. Rate de-matching and decoding are performed on read data, and then radio network temporary identifier (radio network temporary identifier, RNTI) descrambling and cyclic redundancy check (cyclic redundancy check, CRC) is performed on obtained data. After the CRC succeeds, a user knows that a PDCCH is needed by the user and further decodes content of DCI.

### 6. Aggregation level (aggregation level, AL)

A quantity of CCEs included in one PDCCH is referred to as an aggregation level of the PDCCH. Different PDCCHs may use different aggregation levels, in other words, include different quantity of REs. Therefore, the aggregation level of the PDCCH also indicates a channel capacity of the PDCCH, in other words, a capacity of the PDCCH is determined by the quantity of CCEs. For example, a base station may choose to use one CCE, two CCEs, four CCEs, or eight CCEs to carry one PDCCH. A user does not know which aggregation level is used by a received PDCCH. Therefore, the user tries all possible cases. The different aggregation levels are for supporting different DCI formats in different channel bandwidths and channel environments to improve resource utilization.

### 7. Blind detection (blind detection, BD)

Based on different usage and content, DCI is divided into a plurality of formats and scrambled by using different RNTIs, for example, a random access-RNTI (random access-RNTI, RA-RNTI), a paging-RNTI (paging-RNTI, P-RNTI), and the like. PDCCH information of different users is distinguished by using a cell radio network temporary identifier (cell-RNTI, C-RNTI) corresponding to the PDCCH information. In other words, CRC of DCI is masked by using the C-RNTI. A base station configures, for a user by using higher layer signaling (for example, radio resource control (radio resource control, RRC) signaling), a set of PDCCH candidates for which DCI needs to be monitored. Because the user does not know in advance a format of DCI is carried on a received PDCCH, and does not know a PDCCH candidate or PDCCH candidates on which the base station sends the DCI, the user needs to perform PDCCH blind detection to receive corresponding DCI. Because the user knows, based on configuration information sent by the base station, downlink control information that the user expects to receive currently, the user needs to attempt to decode each PDCCH candidate in the set of PDCCH candidates based on the configuration information. In other words, the user performs CRC check on information on the PDCCH candidate by using a corresponding RNTI. If the CRC succeeds, the user knows that DCI is successfully decoded on the PDCCH candidate. The set of PDCCH candidates is a search space set. A behavior in which the user attempts to decode each PDCCH candidate to determine whether the corresponding DCI is received is referred to as blind detection (Blind detection, BD).

It should be understood that one search space includes one or more PDCCH candidates at a same aggregation level, and a plurality of search spaces at different aggregation levels form one search space set. In addition, a network side may simultaneously configure a plurality of search space sets for the user, for detecting DCI of different formats or carrying DCI of different control information.

The foregoing content briefly describes some terms (nouns) in this application. The following describes a system architecture provided in embodiments of this application.

The technical solutions provided in this application may be applied to an NR system in a 5th generation mobile communication system and/or a future mobile communication system. For ease of understanding, a system architecture of a mobile communication system is first briefly described in this application.

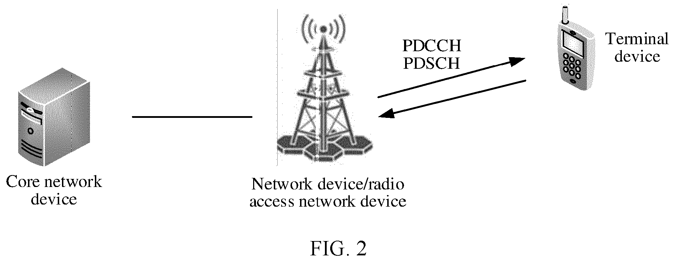

FIG. 2 is a schematic architectural diagram of a mobile communication system according to an embodiment of this application. As shown in FIG. 2, the mobile communication system may include a network device/radio access network device and a terminal device, and optionally further includes a core network device. The terminal device may be connected to the network device/radio access network device in a wireless manner. The terminal device may be located at a fixed position, or may be mobile. FIG. 2 is merely a schematic diagram. The mobile communication system may further include another network device, for example, may further include a wireless relay device and/or a wireless backhaul device, which are/is not shown in FIG. 2. A quantity of network devices and terminal devices included in the mobile communication system are not limited in embodiments of this application.

The network device/radio access network device may be an entity that is configured to transmit or receive a signal on a network side, for example, a gNB. The network device may alternatively be an access device through which the terminal device accesses the mobile communication system in a wireless manner. For example, the network device may be a base station NodeB, an evolved base station (evolved NodeB, eNB), a transmission reception point (transmission reception point, TRP), a next generation base station (next generation NodeB, gNB) in a 5G mobile communication system, a base station in a future mobile communication system, an access node in a Wi-Fi system, or the like. A specific technology and a specific device form that are used by the network device are not limited in embodiments of this application.

The terminal device may be an entity, for example, mobile phone UE, that is configured to receive or transmit a signal on a user side. The terminal device may also be referred to as a terminal Terminal, UE, a mobile station (mobile station, MS), a mobile terminal (mobile terminal, MT), or the like. The terminal device may be a mobile phone (mobile phone), a tablet computer (Pad), a computer with a wireless transceiver function, a virtual reality (VR) terminal device, an augmented reality (AR) terminal device, a wireless terminal in an industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

Optionally, the network device and the terminal device in the mobile communication system may be deployed on land, including being deployed indoor or outdoor, and being deployed as handheld or in-vehicle devices; or may be deployed on a water surface; or may be deployed on an airplane, an unmanned aerial vehicle, a balloon, or a satellite in the air. An application scenario of the network device and the terminal device is not limited in embodiments of this application.

It should be understood that the network device (or the radio access device) may carry scheduling information of uplink and downlink data by using a PDCCH, and carry the downlink/uplink data by using a PDSCH/PUSCH corresponding to the scheduling information and send the downlink/uplink data to the terminal device. After receiving the PDCCH, the terminal device may parse out the scheduling information of the uplink and downlink data, and perform data transmission on the corresponding PDSCH/PUSCH based on the scheduling information.

The network device may use a PDCCH repetition (PDCCH repetition) transmission technology to improve PDCCH receiving performance. There is a plurality of manners for PDCCH repetition transmission, and same DCI may be sent for a plurality of times at different time points, at different frequencies, or using different beams, to obtain a diversity gain and/or a combination gain. In addition, the network device may simultaneously send a same PDCCH to one terminal device by using a plurality of sending stations. This is equivalent to sending same DCI for a plurality of times using different beams. The plurality of sending stations herein may be referred to as multiple transmission points (M-TRP). A manner in which the DCI is sent for a plurality of times at different time points is referred to as a PDCCH repetition transmission technology of time division multiplexing. A manner in which the DCI is sent for a plurality of times at different frequencies is referred to as a PDCCH repetition transmission technology of frequency division multiplexing. A manner in which the DCI is sent for a plurality of times using different beams is referred to as a PDCCH repetition transmission technology of spatial multiplexing.

For the PDCCH repetition (PDCCH repetition) transmission, the terminal device has a plurality of receiving manners. When performing receiving, the terminal device may perform independent decoding on a single PDCCH candidate, or may perform combination and then decoding on a plurality of repetitively transmitted PDCCH candidates. It is assumed that the terminal device receives a group of PDCCH candidate sequences that are repeated twice. The group of PDCCH candidate sequences include two PDCCH candidates, which are respectively {PDCCH candidate 1 and PDCCH candidate 2}. There are four receiving manners of the PDCCH candidate sequences:

Receiving manner 1: Receive decoding is performed only on combined information of the PDCCH candidate 1 and the PDCCH candidate 2.

Receiving manner 2: Receive decoding is performed on the PDCCH candidate 1, and receive decoding is performed on the PDCCH candidate 2, provided that either of the PDCCH candidate 1 or the PDCCH candidate 2 is correctly decoded.

Receiving manner 3: Receive decoding is performed on the PDCCH candidate 1, and receive decoding is performed on combined information of the PDCCH candidate 1 and the PDCCH candidate 2, provided that either of the PDCCH candidate 1 or the combined information of the PDCCH candidate 1 and the PDCCH candidate 2 is correctly decoded.

Receiving manner 4: Receive decoding is performed on the PDCCH candidate 1, receive decoding is performed on the PDCCH candidate 2, and receive decoding is performed on combined information of the PDCCH candidate 1 and the PDCCH candidate 2, provided that either of the PDCCH candidate 1, the PDCCH candidate 2 or the combined information of the PDCCH candidate 1 and the PDCCH candidate 2 is correctly decoded.

However, if the network device wants to perform the PDCCH repetition transmission in a time division multiplexing manner, and the terminal device wants to perform combination and decoding, the terminal device needs to store several previously received PDCCH candidates. This imposes higher requirements on storage and receiving procedures of the terminal device. Therefore, how to enable the terminal device to support combination and decoding becomes an urgent problem to be resolved.

Therefore, embodiments of this application provide a PDCCH repetition transmission configuration method. A condition that needs to be met by a plurality of PDCCH candidates in a PDCCH candidate sequence is reported by UE, or a condition that needs to be met by a plurality of PDCCH candidates is specified in a protocol. In addition, a PDCCH repetition transmission configuration of a base station is limited, and an implementation upper limit is set for PDCCH reception receiving of the UE, to reduce complexity of the UE. In addition, the terminal device may be supported to perform combination and decoding, and a combination gain brought by PDCCH repetition transmission is obtained.

The following describes in detail the technical solutions provided in this application with reference to more accompanying drawings.

The technical solutions provided in this application are described by using two embodiments. Embodiment 1 describes how to design a configuration that is related to PDCCH repetition transmission when UE supports the PDCCH repetition transmission of TDM, to support combination and decoding performed by the UE. Embodiment 2 describes how to design a configuration that is related to PDCCH repetition transmission when UE does not support the PDCCH repetition transmission of TDM, to meet a condition of the UE.

It should be understood that both the "user" and the "UE" mentioned in this application are different forms of the terminal device. In actual application, the "user", the "UE", and the "terminal device" may be used alternatively. The "network device" mentioned in this application may refer to a radio access network device.

### Embodiment 1

Embodiment 1 of this application mainly describes how to design a configuration that is related to PDCCH repetition transmission when UE supports the PDCCH repetition transmission of TDM.

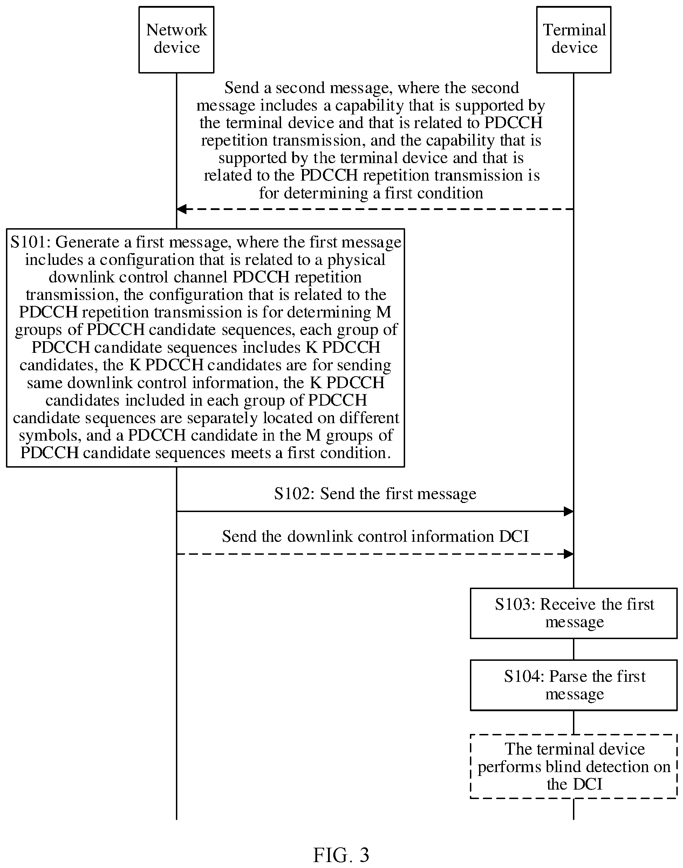

FIG. 3 is a schematic flowchart of a PDCCH repetition transmission configuration method according to an embodiment of this application. As shown in FIG. 3, the PDCCH repetition transmission configuration method includes but is not limited to the following steps:

S101: A network device generates a first message. The first message includes a configuration that is related to physical downlink control channel PDCCH repetition transmission, the configuration that is related to the PDCCH repetition transmission is for determining M groups of PDCCH candidate sequences, each group of PDCCH candidate sequences includes K PDCCH candidates, the K PDCCH candidates are for sending same downlink control information, the K PDCCH candidates included in each group of PDCCH candidate sequences are separately located on different symbols, and a PDCCH candidate in the M groups of PDCCH candidate sequences meets a first condition.

S102: The network device sends the first message.

Optionally, the network device generates the first message. The first message includes the configuration that is related to the PDCCH repetition transmission. The configuration that is related to the PDCCH repetition transmission may be indicated by using CORESET configuration information and search space set configuration information. In other words, the configuration that is related to the PDCCH repetition transmission is carried in the CORESET configuration information and the search space set configuration information. The configuration that is related to the PDCCH repetition transmission may alternatively be indicated by using new signaling. The configuration that is related to the PDCCH repetition transmission is for determining the M groups of PDCCH candidate sequences. Each group of PDCCH candidate sequences includes the K PDCCH candidates, and the K PDCCH candidates are for sending the same downlink control information. In other words, the K PDCCH candidates either send the same downlink control information or do not send downlink control information. M is a positive integer, and K is an integer greater than 1. The K PDCCH candidates included in each group of PDCCH candidate sequences are separately located on different symbols. In other words, the K PDCCH candidates in the group of PDCCH candidate sequences are separately transmitted at different time points. In other words, the K PDCCH candidates are sent in a TDM manner. The PDCCH candidate in the M groups of PDCCH candidate sequences meets the first condition. It should be understood that the "symbol" mentioned in this embodiment of this application may be an orthogonal frequency division multiplexing (orthogonal frequency division multiplexing, OFDM) symbol. The first condition may be preset, for example, specified a standard protocol, or may be configured by the network device. Before performing configuration, the network device may further receive a capability reported by the terminal device, and perform configuration based on the capability reported by the terminal device.

The following describes in detail a condition (namely, the first condition) that needs to be met by the M groups of PDCCH candidate sequences.
1. The first condition is related to a time interval of a plurality of repetition transmissions.

Implementation 1.1: The first condition includes that a time interval between the K PDCCH candidates in each group of PDCCH candidate sequences is less than or equal to a first value.

In an implementation, the first value may be a positive infinity (namely, +∞). In other words, the time interval between the K PDCCH candidates in each group of PDCCH candidate sequences may be any value. In other words, there is no additional requirement on time intervals between a plurality of repetition transmissions of a same PDCCH. This is supported by the terminal device. In another implementation, the first value is a preset value, a value configured by the network device, or a time interval value reported by the terminal device. In other words, the time interval between the K PDCCH candidates in each group of PDCCH candidate sequences is less than or equal to a fixed value. In other words, the time interval between a plurality of repetition transmissions of a same PDCCH are less than or equal to a fixed value. In this embodiment of this application, a unit of the time interval may be a slot (slot), a mini-slot (mini-slot), a time span (span), or an OFDM symbol. It should be understood that the slot, the mini-slot, and the time span are all included several OFDM symbols.

It should be understood that, the time interval between the K PDCCH candidates in each group of PDCCH candidate sequences is less than or equal to the first value. However, this embodiment of this application imposes no limitation on whether the time interval between the K PDCCH candidates of each group of PDCCH candidate sequences in the M groups of PDCCH candidate sequences is the same. In other words, each group of PDCCH candidate sequences may have an independent time interval. For example, M is equal to 2, and the first value is seven OFDM symbols. In this case, a time interval between K PDCCH candidates in a first group of PDCCH candidate sequences may be five OFDM symbols. A time interval between K PDCCH candidates in a second group of PDCCH candidate sequences may be seven OFDM symbols. Alternatively, a time interval between K PDCCH candidates in a first group of PDCCH candidate sequences is five OFDM symbols. A time interval between K PDCCH candidates in a second group of PDCCH candidate sequences is also five OFDM symbols.

Optionally, the time interval between the K PDCCH candidates in each group of PDCCH candidate sequences is a time interval between a start symbol of a PDCCH candidate transmitted for the 1^{st} time in the K PDCCH candidates and an end symbol of a PDCCH candidate transmitted for the K^{th} time (or the last time). One PDCCH candidate occupies one or more symbols. All symbols herein are OFDM symbols.

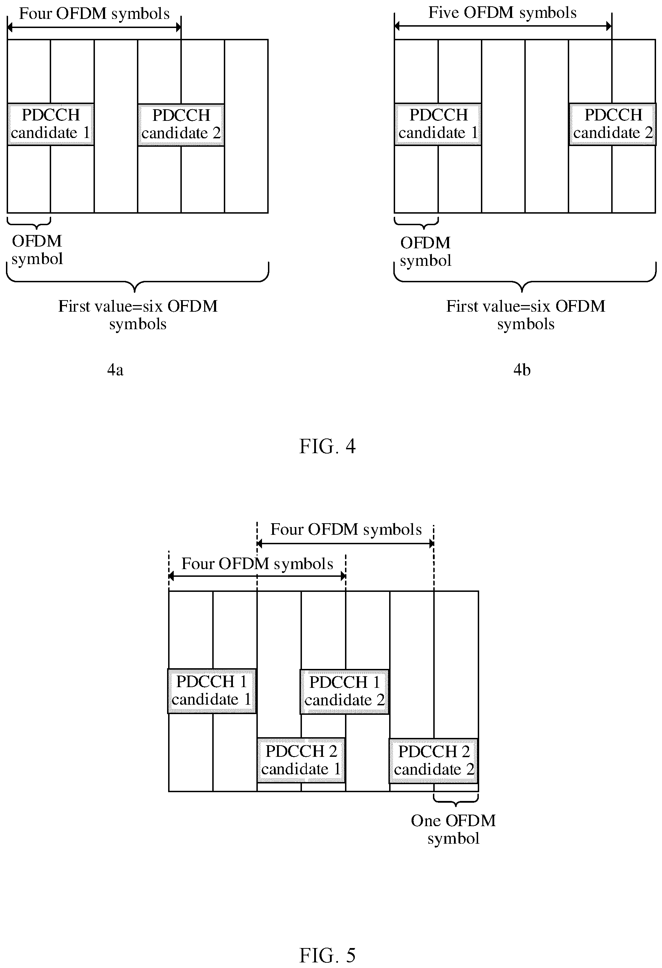

In an example, a group of PDCCH candidate sequences is used as an example. It is assumed that K is equal to 2. To be specific, one PDCCH is repetitively transmitted twice. FIG. 4 is a schematic diagram of a time interval between K PDCCH candidates according to an embodiment of this application. As shown in FIG. 4, the foregoing first value is six OFDM symbols, and one PDCCH candidate occupies two OFDM symbols. 4a and 4b in FIG. 4 respectively show two different time intervals. In FIG. 4, a "PDCCH candidate 1" and a "PDCCH candidate 2" respectively represent two PDCCH candidates that carry same DCI, and the two PDCCH candidates form a group of PDCCH candidate sequences. It should be understood that the "PDCCH candidate 1" and the "PDCCH candidate 2" in FIG. 4 may be understood as two repetition transmissions of a PDCCH. In 4a in FIG. 4, a time interval between a start symbol of a PDCCH candidate transmitted for the 1^{st} time and an end symbol of a PDCCH candidate transmitted for the 2^{nd} time (or the last time) is four OFDM symbols. In 4b in FIG. 4, a time interval between a start symbol of a PDCCH candidate transmitted for the 1^{st} time and an end symbol of a PDCCH candidate transmitted for the 2^{nd} time (or the last time) is five OFDM symbols. The time intervals shown in FIG. 4 do not exceed the first value (in other words, are less than or equal to the first value).

In another example, two groups of PDCCH candidate sequences are used as an example, and a time interval between K PDCCH candidates in each group of PDCCH candidate sequences is less than or equal to the first value. The K PDCCH candidates in the different groups of PDCCH candidate sequences separately meet that the time interval is less than or equal to the first value. It is assumed that M is equal to 2, and K is also equal to 2. To be specific, there are two groups of PDCCH candidate sequences, and each group of PDCCH candidate sequences includes two PDCCH candidates, and the two PDCCH candidates are for sending same DCI. FIG. 5 is a schematic diagram of a time interval between PDCCH candidates in a plurality of groups of PDCCH candidate sequences according to an embodiment of this application. In FIG. 5, a "PDCCH 1" and a "PDCCH 2" respectively represent PDCCHs that carry different DCI. In FIG. 5, a "PDCCH 1 candidate 1" and a " PDCCH 1 candidate 2" respectively represent two PDCCH candidates that carry same DCI (which is assumed to be referred to as DCI 1), and the two PDCCH candidates form a group of PDCCH candidate sequences. Similarly, the " PDCCH 2 candidate 1" and the " PDCCH 2 candidate 2" respectively represent two PDCCH candidates that carry same DCI (which is assumed to be referred to as DCI 2), and the two PDCCH candidates form another group of PDCCH candidate sequences. The DCI 1 and the DCI 2 are different. It should be understood that the " PDCCH 1 candidate 1" and the " PDCCH 1 candidate 2" in FIG. 5 may be understood as two repetition transmissions of the PDCCH 1. Similarly, the " PDCCH 2 candidate 1" and the " PDCCH 2 candidate 2" in FIG. 5 may be understood as two repetition transmissions of the PDCCH 2.

As shown in FIG. 5, the first value is five OFDM symbols, and one PDCCH candidate occupies two OFDM symbols. A time interval between a start symbol of the PDCCH 1 candidate 1 and an end symbol of the PDCCH 1 candidate 2 is four OFDM symbols, less than the first value (the five OFDM symbols). A time interval between a start symbol of the PDCCH 2 candidate 1 and an end symbol of the PDCCH 2 candidate 2 is also four OFDM symbols, less than the first value (the five OFDM symbols).

Optionally, the time interval between the K PDCCH candidates in each group of PDCCH candidate sequences is a time interval between a start symbol of a PDCCH candidate transmitted for the i^{th} time in the K PDCCH candidates and an end symbol of a PDCCH candidate transmitted for the (i+1)^{th} time. In other words, the time interval between the K PDCCH candidates in each group of PDCCH candidate sequences is a time interval between a start symbol and an end symbol of two consecutive transmissions in the K PDCCH candidates. A value range of i is an interval [1, K-1]. To be specific, i is greater than or equal to 1 and less than or equal to K-1. It should be understood that one PDCCH candidate occupies one or more symbols.

For example, if K is equal to 3, and a value of i is 2, a time interval between K PDCCH candidates in a group of PDCCH candidate sequences is a time interval between a start symbol of a PDCCH candidate transmitted for the 2^{nd} time and an end symbol of a PDCCH candidate transmitted for the 3^{rd} time. For another example, if a value of i is 1, a time interval between K PDCCH candidates in a group of PDCCH candidate sequences is a time interval between a start symbol of a PDCCH candidate transmitted for the 1^{st} time and an end symbol of a PDCCH candidate transmitted for the 2^{nd} time.

Optionally, the time interval between the K PDCCH candidates in each group of PDCCH candidate sequences is a time interval between a start symbol of a PDCCH candidate transmitted for the 1^{st} time in the K PDCCH candidates and a start symbol of a PDCCH candidate transmitted for the K^{th} time (or the last time). One PDCCH candidate occupies one or more symbols.

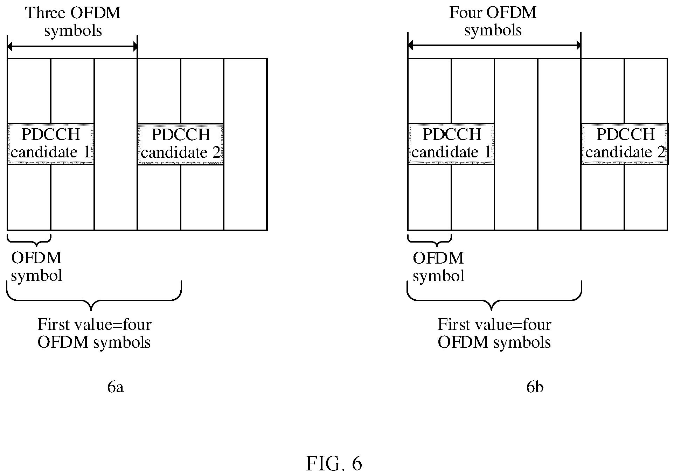

In an example, a group of PDCCH candidate sequences is used as an example. It is assumed that K is equal to 2. To be specific, one PDCCH is repetitively transmitted twice. FIG. 6 is another schematic diagram of a time interval between K PDCCH candidates according to an embodiment of this application. As shown in FIG. 6, the foregoing first value is four OFDM symbols, and one PDCCH candidate occupies two OFDM symbols. 6a and 6b in FIG. 6 respectively show two different time intervals. In FIG. 6, a "PDCCH candidate 1" and a "PDCCH candidate 2" respectively represent two PDCCH candidates that carry same DCI, and the two PDCCH candidates form a group of PDCCH candidate sequences. It should be understood that the "PDCCH candidate 1" and the "PDCCH candidate 2" in FIG. 6 may be understood as two repetition transmissions of a PDCCH. In 6a in FIG. 6, a time interval between a start symbol of a PDCCH candidate transmitted for the 1^{st} time and a start symbol of a PDCCH candidate transmitted for the 2^{nd} time (or the last time) is three OFDM symbols. In 6b in FIG. 6, a time interval between a start symbol of a PDCCH candidate transmitted for the 1^{st} time and a start symbol of a PDCCH candidate transmitted for the 2^{nd} time (or the last time) is four OFDM symbols. The time intervals shown in FIG. 6 do not exceed the first value (in other words, are less than or equal to the first value).

Optionally, the time interval between the K PDCCH candidates in each group of PDCCH candidate sequences is a time interval between a start symbol of a PDCCH candidate transmitted for the i^{th} time in the K PDCCH candidates and a start symbol of a PDCCH candidate transmitted for the (i+1)^{th} time. In other words, the time interval between the K PDCCH candidates in each group of PDCCH candidate sequences is a time interval between a start symbol and a start symbol of two consecutive transmissions in the K PDCCH candidates. A value range of i is an interval [1, K-1]. To be specific, i is greater than or equal to 1 and less than or equal to K-1. It should be understood that one PDCCH candidate occupies one or more symbols.

Optionally, the time interval may alternatively be an interval between an end symbol of a PDCCH candidate in the K PDCCH candidates transmitted for the 1^{st} time and a start symbol of a PDCCH candidate transmitted for the K^{th} time; an interval between an end symbol of a PDCCH candidate transmitted for the i^{th} time in the K PDCCH candidates and a start symbol of a PDCCH candidate transmitted for the (i+1)^{th} time; an interval between an end symbol of a PDCCH candidate transmitted for the 1^{st} time in the K PDCCH candidates and an end symbol of a PDCCH candidate transmitted for the K^{th} time; or an interval between an end symbol of a PDCCH candidate transmitted for the i^{th} time in the K PDCCH candidates and an end symbol of a PDCCH candidate transmitted for the (i+1)^{th} time.

Optionally, when a configuration of the network device does not meet the condition of the foregoing implementation 1.1, a PDCCH candidate sequence group that exceeds a capability of the UE falls back to a PDCCH candidate sequence detection manner without repetition transmission. For example, if a time interval between K PDCCH candidates in a group of PDCCH candidate sequences is greater than the first value, the K PDCCH candidates in the PDCCH candidate sequences are not repetitively sent. The terminal device detects each PDCCH candidate in the K PDCCH candidates in a conventional independent detection manner.

Implementation 1.2: The first condition includes that the K PDCCH candidates in each group of PDCCH candidate sequences are located in one time window, a size of the time window is equal to the first value, and a start symbol of the time window is preset.

Specifically, the K PDCCH candidates in each group of PDCCH candidate sequences are located in one time window, and different groups of PDCCH candidate sequences are located in a same time window. In other words, the M groups of PDCCH candidate sequences share a same time window. A size of the time window is equal to the first value. The start symbol of the time window is preset in a protocol or configured by the network device. In other words, the start symbol of the time window is irrelevant to a PDCCH candidate transmitted in the time window. One PDCCH candidate occupies one or more symbols.

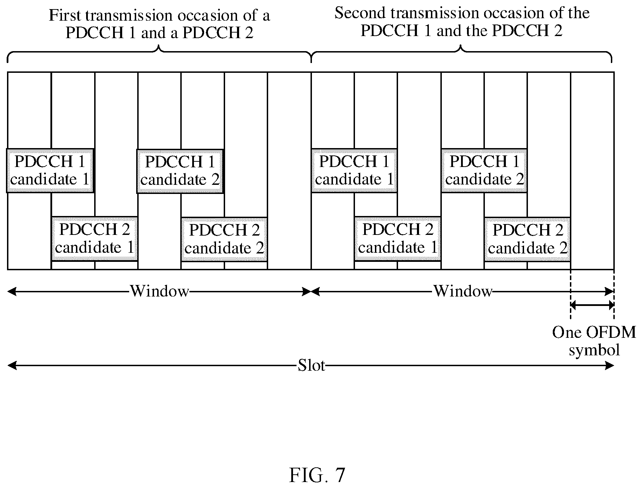

In an example, M is equal to 2, and K is also equal to 2. To be specific, there are two groups of PDCCH candidate sequences, each group of PDCCH candidate sequences includes two PDCCH candidates, and the two PDCCH candidates are for sending same DCI. It is assumed that one slot (slot) has 14 OFDM symbols, and each group of PDCCH candidate sequences has two sending occasion s in one slot. FIG. 7 is a schematic diagram of time windows according to an embodiment of this application. As shown in FIG. 7, a size of a time window is seven OFDM symbols, in other words, the first value is seven OFDM symbols, and one PDCCH candidate occupies two OFDM symbols. In FIG. 7, a "PDCCH 1" and a "PDCCH 2" respectively represent PDCCHs that carry different DCI. In FIG. 7, a "PDCCH 1 candidate 1" and a "PDCCH 1 candidate 2" respectively represent two PDCCH candidates that carry same DCI (which is assumed to be referred to as DCI 1), and the two PDCCH candidates form a group of PDCCH candidate sequences. Similarly, a "PDCCH 2 candidate 1" and a "PDCCH 2 candidate 2" respectively represent two PDCCH candidates that carry same DCI (which is assumed to be referred to as DCI 2), and the two PDCCH candidates form another group of PDCCH candidate sequences. The DCI 1 and the DCI 2 are different. It should be understood that the "PDCCH 1 candidate 1" and the "PDCCH 1 candidate 2" in FIG. 7 may be understood as two repetition transmissions of the PDCCH 1. Similarly, the "PDCCH 2 candidate 1" and the "PDCCH 2 candidate 2" in FIG. 7 may be understood as two repetition transmissions of the PDCCH 2.

It may be learned that in this embodiment of this application, the time interval between the K PDCCH candidates in each group of PDCCH candidate sequences is restricted or the K PDCCH candidates are restricted to be located in one time window, to ensure that after the terminal device subsequently receives a plurality of PDCCH candidates, a total quantity of resources corresponding to a PDCCH candidate to be stored does not exceed a value obtained by multiplying a length of the time window by a quantity of bandwidth symbols.

Optionally, when a configuration of the network device does not meet the condition of the foregoing implementation 1.2, a PDCCH candidate sequence group that exceeds a capability of the UE falls back to a PDCCH candidate sequence detection manner without repetition transmission. For example, if K PDCCH candidates of a group of PDCCH candidate sequences are not located in one time window. In other words, the K PDCCH candidates are located in a plurality of time windows, the K PDCCH candidates in the PDCCH candidate sequences are not repetitively sent. The terminal device detects each PDCCH candidate in the K PDCCH candidates in a conventional independent detection manner.

### 2. The first condition is related to a storage capability.

Implementation 2.1: The first condition includes that a quantity of CCEs corresponding to first K-1 PDCCH candidates in each group of PDCCH candidate sequences is less than or equal to a second value. In other words, a quantity of PDCCH candidates to be stored (namely, the first K-1 PDCCH candidates) or the quantity of CCEs to be stored in each group of PDCCH candidate sequences does not exceed the second value. One PDCCH candidate includes one or more CCEs. The second value is a preset value, a value configured by the network device, or a quantity of CCEs reported by the terminal device. It should be understood that "storage" mentioned in this embodiment of this application means storage by using an additional storage resource.

For example, if the second value is 10, it is assumed that an aggregation level of a group of PDCCH candidate sequences is 2, in other words, one PDCCH candidate in the group of PDCCH includes two CCEs. Therefore, the group of PDCCH candidate sequences includes a maximum of six PDCCH candidates, and a quantity of CCEs corresponding to first five PDCCH candidates is equal to 10 (2x5=10).

Optionally, when a configuration of the network device does not meet the condition of the foregoing implementation 2.1, a PDCCH candidate sequence group that exceeds a capability of the UE falls back to a PDCCH candidate sequence detection manner without repetition transmission. For example, if a quantity of CCEs corresponding to first K-1 PDCCH candidates in a group of PDCCH candidate sequences is greater than the second value, K PDCCH candidates in the PDCCH candidate sequences are not repetitively sent. The terminal device detects each PDCCH candidate in the K PDCCH candidates in a conventional independent detection manner.

Implementation 2.2: The first condition includes that a total quantity of CCEs corresponding to the M groups of PDCCH candidate sequences is less than or equal to a fourth value. One PDCCH candidate includes one or more CCEs. In other words, a total quantity of PDCCH candidates to be stored or a total quantity of CCEs to be stored does not exceed the fourth value. The fourth value is a preset value, a value configured by the network device, or a maximum quantity of CCEs that can be stored and reported by the terminal device.

In an implementation, the total quantity of CCEs corresponding to the M groups of PDCCH candidate sequences is a sum of a quantity of CCEs corresponding to all PDCCH candidates included in the M groups of PDCCH candidate sequences.

For example, M is equal to 3 and K is equal to 2. It is assumed that the fourth value is 30 CCEs. A total quantity of CCEs corresponding to six PDCCH candidates included in the three groups of PDCCH candidate sequences does not exceed 30. It is assumed that an aggregation level of a first group of PDCCH candidate sequences is 1. To be specific, each PDCCH candidate in the first group of PDCCH candidate sequences includes one CCE. In this case, a quantity of CCEs corresponding to the first group of PDCCH candidate sequences is 2 (1x2=2). It is assumed that an aggregation level of a second group of PDCCH candidate sequences is 4. To be specific, each PDCCH candidate in the second group of PDCCH candidate sequences includes four CCEs. In this case, a quantity of CCEs corresponding to the second group of PDCCH candidate sequences is 8 (4x2=8). It is assumed that an aggregation level of a third group of PDCCH candidate sequences is 8. To be specific, each PDCCH candidate in the third group of PDCCH candidate sequences includes eight CCEs. In this case, a quantity of CCEs corresponding to the third group of PDCCH candidate sequences is 16 (2x8=16). Therefore, the total quantity of CCEs corresponding to the three groups of PDCCH candidate sequences is 26 (2+8+16=26), not exceeding the fourth value 30.

In another implementation, the total quantity of CCEs corresponding to the M groups of PDCCH candidate sequences is a sum of a quantity of CCEs corresponding to each group of PDCCH candidate sub-sequences in the M groups of PDCCH candidate sequences. A PDCCH candidate sub-sequence includes first K-1 PDCCH candidates in a PDCCH candidate sequence. In other words, the total quantity of CCEs corresponding to the M groups of PDCCH candidate sequences is a sum of a quantity of CCEs corresponding to M groups of PDCCH candidate sub-sequences.

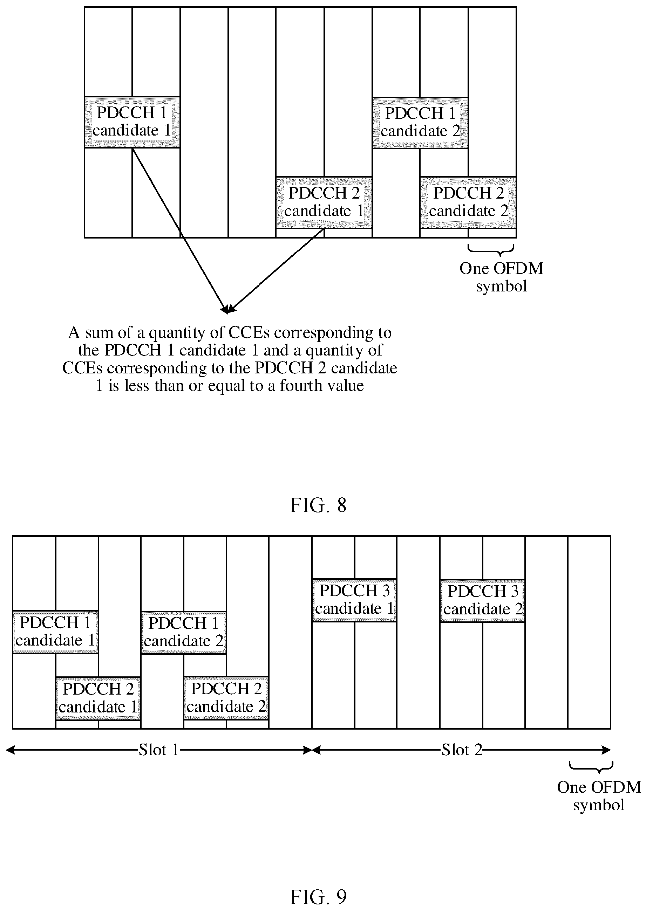

In an example, two repetition transmissions are used as an example, that is, K is equal to 2. It is assumed that M is also equal to 2. For a group of PDCCH candidate sequences for repetition transmission, one PDCCH candidate or a group of CCEs needs to be stored (where a quantity of CCEs included in the group of CCEs is related to an aggregation level of the PDCCH candidate sequences.) FIG. 8 is a schematic diagram of two groups of PDCCH candidate sequences according to an embodiment of this application. As shown in FIG. 8, a first group of PDCCH candidate sequences includes two PDCCH candidates: a PDCCH 1 candidate 1 and a PDCCH 1 candidate 2. A second group of PDCCH candidate sequences also includes two PDCCH candidates: a PDCCH 2 candidate 1 and a PDCCH 2 candidate 2. A sum of a quantity of CCEs corresponding to a first PDCCH candidate (namely, the 1^{st} PDCCH candidate) in the first group of PDCCH candidate sequences and a quantity of CCEs corresponding to a first PDCCH candidate (namely, the 1^{st} PDCCH candidate) in the second group of PDCCH candidate sequences is less than or equal to the fourth value. In FIG. 8, a "PDCCH 1" and a "PDCCH 2" respectively represent two groups of PDCCH candidate sequences. In FIG. 8, the "PDCCH 1 candidate 1" and the "PDCCH 1 candidate 2" respectively represent two PDCCH candidates that carry same DCI (which is assumed to be referred to as DCI 1). Similarly, the "PDCCH 2 candidate 1" and the "PDCCH 2 candidate 2" respectively represent two PDCCH candidates that carry same DCI (which is assumed to be referred to as DCI 2). The DCI 1 and the DCI 2 may be the same or may be different. It should be understood that the " PDCCH 1 candidate 1" and the "PDCCH 1 candidate 2" in FIG. 8 may be understood as two repetition transmissions of the PDCCH 1. Similarly, the "PDCCH 2 candidate 1" and the "PDCCH 2 candidate 2" in FIG. 8 may be understood as two repetition transmissions of the PDCCH 2.

In the two implementations of the foregoing implementation 2.2, CCEs corresponding to different PDCCH candidates may completely overlap, partially overlap, or not overlap.

Optionally, regardless of whether the CCEs corresponding to the different PDCCH candidates overlap or not, when the total quantity of CCEs corresponding to the M groups of PDCCH candidate sequences is determined, a quantity of CCEs corresponding to different PDCCH candidates are separately calculated. For example, an aggregation level of a PDCCH candidate 1 is 8, in other words, the PDCCH candidate 1 corresponds to eight CCEs. An aggregation level of a PDCCH candidate 2 is 4, in other words, the PDCCH candidate 2 corresponds to four CCEs. It is assumed that two CCEs of the PDCCH candidate 1 and the PDCCH candidate 2 overlap, and a total quantity of CCEs is still 8+4=12.

Optionally, when the total quantity of CCEs is determined, overlapping parts of CCEs corresponding to different PDCCH candidates need to be considered, and calculation is not repeated. For example, an aggregation level of a PDCCH candidate 1 is 8, in other words, the PDCCH candidate 1 corresponds to eight CCEs. An aggregation level of a PDCCH candidate 2 is 4, in other words, the PDCCH candidate 2 corresponds to four CCEs. It is assumed that two CCEs of the PDCCH candidate 1 and the PDCCH candidate 2 overlap, and a total quantity of CCEs is 8+4-2=10.

In still another implementation, the total quantity of CCEs corresponding to the M groups of PDCCH candidate sequences is a sum of CCEs of CORESETs of each group of PDCCH candidate sub-sequences in the M groups of PDCCH candidate sequences. A PDCCH candidate sub-sequence includes first K-1 PDCCH candidates in a PDCCH candidate sequence.

In an example, the terminal device uses a receiving manner 1. To be specific, decoding is performed only once on combined information of K PDCCH candidates in a group of PDCCH candidate sequences. For this type of terminal device, when first K-1 PDCCH candidates are received, processing such as demodulation may not be performed, and a CCE of an entire CORESET may be directly stored, and then processed together until the K^{th} PDCCH candidate is received.

In another example, the terminal device uses a receiving manner other than the receiving manner 1. To be specific, first K-1 PDCCH candidates in a group of PDCCH candidate sequences are decoded. In this case, a manner of storing a CCE of an entire CORESET may be used. A quantity of CCEs actually corresponding to the M groups of PDCCH candidate sequences does not need to be calculated. This reduces complexity of the UE and the base station.

Optionally, when a configuration of the network device does not meet the condition of the foregoing implementation 2.2, a PDCCH candidate sequence group that exceeds a capability of the UE falls back to a PDCCH candidate sequence detection manner without repetition transmission. For example, if the total quantity of CCEs corresponding to the M groups of PDCCH candidate sequences is greater than the fourth value, the M groups of PDCCH candidate sequences are not repetitively sent. The terminal device detects each PDCCH candidate in the M groups of PDCCH candidate sequences in a conventional independent detection manner.

Implementation 2.3: The first condition includes that M is less than or equal to a third value. The third value is a preset value, a value configured by the network device, or a value reported by the terminal device.

It should be understood that, for a group of PDCCH candidate sequences, the terminal device may store only one piece of combination information. To be specific, because a plurality of PDCCH candidates in the PDCCH candidate sequence are located on different symbols (in other words, the plurality of PDCCH candidates are sent at different time points), after receiving the 1^{st} PDCCH candidate in the group of the PDCCH candidate sequences, the terminal device may first store the 1^{st} PDCCH candidate. After receiving the 2^{nd} PDCCH candidate in the group of the PDCCH candidate sequences, the terminal device first combines the 2nd PDCCH candidate with the 1^{st} PDCCH candidate stored by the terminal device, and stores the combined information. After receiving the 3^{rd} PDCCH candidate in the group of the PDCCH candidate sequences, the terminal device extracts the stored combination information and combines the stored combination information with the 3rd PDCCH candidate, and stores the combination information. The rest may be deduced by analogy until the last PDCCH candidate in the group of PDCCH candidate sequences is received. It may be learned that the terminal device needs to store only one piece of combination information each time. Therefore, for the M groups of PDCCH candidate sequences, the terminal device needs to store M pieces of combination information.

It may be learned that in this embodiment of this application, a quantity of PDCCH candidates included in the PDCCH candidate sequence or a quantity of CCEs corresponding to the PDCCH candidate sequence configured by the network device is restricted, to ensure that a quantity of PDCCH candidates to be stored or a quantity of CCEs to be stored by the terminal device does not exceed an upper limit (which is a storage capability of the terminal device).

Optionally, when a configuration of the network device does not meet the condition of the foregoing implementation 2.3, a PDCCH candidate sequence group that exceeds a capability of the UE falls back to a PDCCH candidate sequence detection manner without repetition transmission. For example, if a value of M is greater than the fourth value, the M groups of PDCCH candidate sequences are not repetitively sent. The terminal device detects each PDCCH candidate in the M groups of PDCCH candidate sequences in a conventional independent detection manner. Alternatively, if a value of M is greater than the fourth value, the UE performs repetition transmission detection only on corresponding first fourth value groups of PDCCH candidate sequences, and detects the (M-fourth value) groups of PDCCH candidate sequences in a conventional independent detection manner. The first fourth value groups may be selected based on a manner of sorting an index of a search space (search space, SS) set (set) and/or a size of an aggregation level, or the like.

Implementation 2.4: The first condition includes that there are N groups of PDCCH candidate sequences that are located in a same slot and that are in the M groups of PDCCH candidate sequences, N is a positive integer, N is less than or equal to M, and N is less than or equal to a fifth value. The fifth value is a preset value, a value configured by the network device, or a value reported by the terminal device.

It should be understood that, for a group of PDCCH candidate sequences, the terminal device may store only one piece of combination information. A specific reason is the same as that described in the implementation 2.3. Details are not described herein again. For the N groups of PDCCH candidate sequences located in a same slot, the terminal device needs to prepare a storage resource for each of the N groups of PDCCH candidate sequences. OFDM symbols of first K-1 PDCCH candidates in the N groups of PDCCH candidate sequences may completely overlap, partially overlap, or not overlap. For a case of overlapping (meaning partial overlap and complete overlap), because the first K-1 PDCCH candidates in the N groups of PDCCH candidate sequences overlap in time, it is late in time to extract a PDCCH candidate 1 in a first group of PDCCH candidate sequences from the storage resource, and perform combination and decoding on the PDCCH candidate 1 and a PDCCH candidate 2 in the group of PDCCH candidate sequences. A PDCCH candidate 1 in a second group of PDCCH candidate sequences has arrived and needs to be stored in the storage resource. Therefore, the UE needs to prepare the storage resource for each of the N groups of PDCCH candidate sequences, and then perform operations such as combination and decoding. For a case of non-overlapping, a time interval between first K-1 PDCCH candidate sequences in different groups of PDCCH candidate sequences may be small, for example, a difference between the first K-1 PDCCH candidate sequences is one OFDM symbol, or may be large, for example, a difference between the first K-1 PDCCH candidate sequences is a plurality of OFDM symbols. When the time interval between the first K-1 PDCCH candidate sequences in different groups of PDCCH candidate sequences is small, the first K-1 PDCCH candidate sequences may not be combined and decoded in time. Therefore, the UE also needs to prepare the storage resource for each of the N groups of PDCCH candidate sequences, and then perform operations such as combination and decoding. When the time interval between the first K-1 PDCCH candidate sequences in different groups of PDCCH candidate sequences is large, the first K-1 PDCCH candidate sequences may be combined and decoded in time. However, for simplicity of a rule, the storage resource may still be prepared for each of the N groups of PDCCH candidate sequences. Then, operations such as combination and decoding, are performed. Certainly, for the case of non-overlapping, when the time interval between the first K-1 PDCCH candidate sequences of different groups of PDCCH candidate sequences is large, the first K-1 PDCCH candidate sequences may also occupy a same storage resource based on a time sequence relationship.

For two groups of PDCCH candidate sequences located on different slots, they may occupy a same storage resource based on a time sequence relationship. FIG. 9 is a schematic diagram of three groups of PDCCH candidate sequences according to an embodiment of this application. For example, two repetition transmissions are used as an example, that is, K is equal to 2. It is assumed that M is equal to 3. As shown in FIG. 9, a first group of PDCCH candidate sequences includes two PDCCH candidates: a PDCCH 1 candidate 1 and a PDCCH 1 candidate 2. A second group of PDCCH candidate sequences also includes two PDCCH candidates: a PDCCH 2 candidate 1 and a PDCCH 2 candidate 2. A third group of PDCCH candidate sequences also includes two PDCCH candidates: a PDCCH 3 candidate 1 and a PDCCH 3 candidate 2. The first group of PDCCH candidate sequences and the second group of candidate sequences are located in a same slot (for example, a slot 1 in FIG. 9). The first group of PDCCH candidate sequences and the third group of candidate sequences, and the second group of PDCCH candidate sequences and the third group of candidate sequences are both located on different slots. The first group of PDCCH candidate sequences and the third group of PDCCH candidate sequences are used as an example. The two groups of PDCCH candidate sequences are respectively located in the slot 1 (slot 1) and a slot 2 (slot 2). The UE may store the PDCCH 1 candidate 1 in the slot 1, extracts the PDCCH 1 candidate 1 from the storage resource after receiving the PDCCH 1 candidate 2, and performs combination and decoding on the PDCCH 1 candidate 1 and the PDCCH 1 candidate 2. Then, the UE receives and stores the PDCCH 3 candidate 1 in the slot 2, and extracts the PDCCH 3 candidate 1 from the storage resource after receiving the PDCCH 3 candidate 2, and performs combination and decoding on the PDCCH 3 candidate 1 and the PDCCH 3 candidate 2. Therefore, for the N groups of PDCCH candidate sequences located in a same slot, the terminal device needs to store N pieces of combination information.

Optionally, when a configuration of the network device does not meet the condition of the foregoing implementation, a PDCCH candidate sequence group that exceeds a capability of the UE falls back to a PDCCH candidate sequence detection manner without repetition transmission. For example, if a value of N is greater than the fifth value, the N groups of PDCCH candidate sequences are not repetitively sent. The terminal device detects each PDCCH candidate in the N groups of PDCCH candidate sequences in a conventional independent detection manner. Alternatively, if a value of N is greater than the fifth value, the UE performs repetition transmission detection only on corresponding first fifth value groups of PDCCH candidate sequences, and detects (N-the fifth value) groups of PDCCH candidate sequences in a conventional independent detection manner. The first N^{th} value group may be selected based on a manner of sorting an index of the SS set and/or a size of an aggregation level, or the like.

Implementation 2.5: The first condition includes that there are O groups of PDCCH candidate sequences that simultaneously occupy a storage resource and that are in the M groups of PDCCH candidate sequences, O is a positive integer, O is less than or equal to M, and O is less than or equal to a sixth value. The sixth value is a preset value, a value configured by the network device, or a value reported by the terminal device. That the two groups of PDCCH candidate sequences simultaneously occupy the storage resource means that a time when the two groups of PDCCH candidate sequences occupy the storage resource that overlaps, and the overlap includes partial overlap or all overlap.

Optionally, a time when a group of PDCCH candidate sequences occupies the storage resource is defined as:
- a start time point.

The start time point of a time when the group of PDCCH candidate sequences occupies the storage resource is: a start OFDM symbol of the 1^{st} PDCCH candidate, the X^{th} OFDM symbol after the start OFDM symbol of the 1^{st} PDCCH candidate, an end OFDM symbol of the 1^{st} PDCCH candidate, or an X^{th} OFDM symbol after the end OFDM symbol of the 1^{st} PDCCH candidate. After receiving the 1^{st} PDCCH candidate, the terminal device needs to write information corresponding to the PDCCH candidate into the storage resource. Based on different implementations of the UE, the terminal device may start to write into the storage resource when receiving the 1^{st} OFDM symbol of the PDCCH candidate. Alternatively, the terminal device may start to write into the storage resource after receiving the last OFDM symbols of the PDCCH candidate, or the terminal device may finish preprocessing the PDCCH candidate and then write the PDCCH candidate into the storage resource. The preprocessing includes but is not limited to processing such as channel estimation and demodulation.
- An end time point

The end time point of a time when the group of PDCCH candidate sequences occupies the storage resource is: a start OFDM symbol of the K^{th} PDCCH candidate, the Y^{th} OFDM symbol after the start OFDM symbol of the K^{th} PDCCH candidate, the end OFDM symbol of the K^{th} PDCCH candidate, or the Y^{th} OFDM symbol after the end OFDM symbol of the K^{th} PDCCH candidate. After receiving the 1^{st} OFDM symbol of the K^{th} PDCCH candidate, the terminal device may read, from storage, the remaining K-1 PDCCH candidates in the group of PDCCH candidate sequences. Alternatively, after the last OFDM symbol of the K^{th} PDCCH candidate is received, the remaining K-1 PDCCH candidates in the group of PDCCH candidate sequences are read out from storage. Alternatively, the remaining K-1 PDCCH candidates in the group of PDCCH candidate sequences may be read out from the storage after the processing of the K^{th} PDCCH candidate sequence is completed. The processing herein includes but is not limited to processing such as channel estimation, demodulation, soft value combination, and decoding.
- X and Y are capability values specified by a protocol, configured by a network device, or reported by a terminal device.

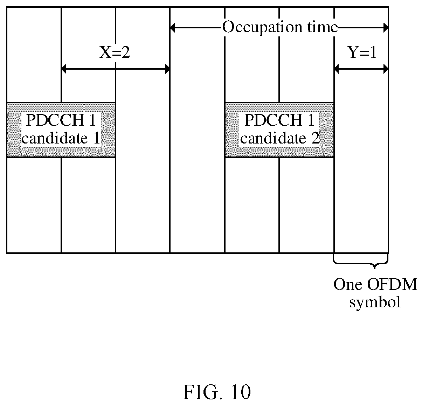

For example, FIG. 10 is a schematic diagram of a time when a group of PDCCH candidate sequence occupies a storage resource according to an embodiment of this application. For example, two repetition transmissions are used as an example, that is, K is equal to 2. It is assumed that X is equal to 2, and a start time point of a time when the PDCCH candidate sequence occupies the storage resource is the 2^{nd} OFDM symbol after the start OFDM symbols of the 1^{st} PDCCH candidate. It is assumed that Y is equal to 1, and an end time point of a time when the PDCCH candidate sequence occupies the storage resource is the 1^{st} OFDM symbol after the end OFDM symbols of the K^{th} PDCCH candidate. As shown in FIG. 10, the PDCCH candidate sequence includes two PDCCH candidates: a PDCCH 1 candidate 1 and a PDCCH 1 candidate 2. The two PDCCH candidates respectively occupy two OFDM symbols, and a time when this group of PDCCH candidate sequences occupies the storage resource is four OFDM symbols.

Optionally, in a time when one group of PDCCH candidate sequences occupies the storage resource, any PDCCH candidate of another group of PDCCH candidate sequences is not allowed to appear, in other words, occupation time of the two groups of PDCCH candidate sequences is not allowed to overlap. In other words, only one group of PDCCH candidate sequences is simultaneously allowed to exist.

Optionally, when a configuration of the network device does not meet the condition of the foregoing implementation 2.5, PDCCH candidate sequence groups that exceed a capability of UE falls back to a PDCCH candidate sequence detection manner without repetition transmission. For example, if a value of O is greater than the sixth value, the O groups of PDCCH candidate sequences are not repetitively sent. The terminal device detects each PDCCH candidate in the O groups of PDCCH candidate sequences in a conventional independent detection manner. Alternatively, if a value of O is greater than the sixth value, the UE performs repetition transmission detection only on corresponding first sixth value groups of PDCCH candidate sequences, and detects (O-the sixth value) groups of PDCCH candidate sequences in a conventional independent detection manner. The first O^{th} value group may be selected based on a manner of sorting an index of the SS set and/or a size of an aggregation level, or the like.

Optionally, if one or more PDCCH candidates in a group of PDCCH candidate sequences no longer need to be monitored due to a reason such as an uplink-downlink configuration conflict or an over-configuration rule, the behavior does not affect occupation of the storage resource by the group of PDCCH candidate sequences. In other words, the storage resource occupied by the PDCCH candidate sequences is related only to configuration positions in the group of PDCCH candidate sequences, and are not related to whether the PDCCH candidate sequences are actually monitored.

It should be understood that the foregoing implementation 1.1, implementation 1.2, implementation 2.1, implementation 2.2, implementation 2.3, implementation 2.4, and implementation 2.5 may be selectively used, or may be used together in any combination. This is not limited in embodiments of this application. When the combination is used, all conditions of the implementations in the combination need to be met.

Optionally, before step S101, the PDCCH repetition transmission configuration method further includes: The terminal device sends a second message. The second message includes a capability that is supported by the terminal device and that is related to the PDCCH repetition transmission, and the capability that is supported by the terminal device and that is related to the PDCCH repetition transmission is for determining the first condition.

In an example, the capability that is supported by the terminal device and that is related to the PDCCH repetition transmission includes: a time interval between a plurality of PDCCH candidates is a first value. The first value is for determining a time interval between K PDCCH candidates in each group of PDCCH candidate sequences in M groups of PDCCH candidate sequences subsequently configured by a network device. Optionally, a first value reported by the terminal device may be one of several optional values predefined in a protocol.

In another example, the capability that is supported by the terminal device and that is related to the PDCCH repetition transmission includes: a size of a time window is a first value. The first value is for determining a time window size of each group of PDCCH candidate sequences. Optionally, a first value reported by the terminal device may be one of several optional values predefined in a protocol.

In still another example, the capability that is supported by the terminal device and that is related to the PDCCH repetition transmission includes: a quantity of CCEs corresponding to each group of PDCCH candidate sequences is a second value, and is for determining that a quantity of CCEs corresponding to first K-1 PDCCH candidates in each group of PDCCH candidate sequences configured by the network device does not exceed the second value. Optionally, the second value reported by the terminal device may be one of several optional values predefined in a protocol.

In still another example, the capability that is supported by the terminal device and that is related to the PDCCH repetition transmission includes: a value of M is a third value, and is for determining that a quantity of PDCCH candidate sequence groups configured by the network device does not exceed the third value. Optionally, a third value reported by the terminal device may be one of several optional values predefined in a protocol.

In still another example, the capability that is supported by the terminal device and that is related to the PDCCH repetition transmission includes: a total quantity of CCEs corresponding to a plurality of groups of PDCCH candidate sequences is a fourth value, and is for determining that a total quantity of CCEs corresponding to the M groups of PDCCH candidate sequences configured by the network device does not exceed the fourth value. Optionally, the fourth value reported by the terminal device may be one of several optional values predefined in a protocol.

Optionally, after step S102, the PDCCH repetition transmission configuration method further includes: The network device sends DCI. It should be understood that the network device sends the DCI based on the configuration that is related to the PDCCH repetition transmission in the first message.

S103: The terminal device receives the first message.

S104: The terminal device parses the first message.

Optionally, the terminal device receives the first message, parses the first message, to obtain the configuration that is related to the PDCCH repetition transmission included in the first message, and then may determine the M groups of PDCCH candidate sequences based on the configuration that is related to the PDCCH repetition transmission.

Optionally, after step S104, the PDCCH repetition transmission configuration method further includes: The terminal device performs blind detection on the DCI. For ease of describing a process in which the terminal device performs blind detection on the DCI, a group of PDCCH candidate sequences is used as an example, in other words, M is equal to 1. It is assumed that the group of PDCCH candidate sequences includes four PDCCH candidates (in other words, K is equal to 4): PDCCH candidate 1, PDCCH candidate 2, PDCCH candidate 3, and PDCCH candidate 4. In an implementation, after the terminal device receives the PDCCH candidate 1, the PDCCH candidate 2, and the PDCCH candidate 3 at different time points, separately stores the PDCCH candidate 1, PDCCH candidate 2, and PDCCH candidate 3, and then receives the PDCCH candidate 4. The terminal device combines the PDCCH candidate 1, the PDCCH candidate 2, the PDCCH candidate 3, and the PDCCH candidate 4, and then performs a receiving and decoding operation on combined information, and performs CRC check. If the CRC succeeds, DCI is obtained.

In another implementation, after receiving the PDCCH candidate 1, the terminal device stores the PDCCH candidate 1. After receiving the PDCCH candidate 2, the terminal device combines the PDCCH candidate 2 and the PDCCH candidate 1, and stores combined information 1. Then, after receiving the PDCCH candidate 3, the terminal device combines the PDCCH candidate 3 and the stored information 1, and stores combined information 2. After finally receiving the PDCCH candidate 4, the terminal device combines the PDCCH candidate 4 and the stored information 2, to obtain combined information 3, and performs a receiving and decoding operation on the information 3, and performs CRC check on the information 3. If the CRC succeeds, DCI is obtained.

In still another implementation, after receiving the PDCCH candidate 1, the terminal device stores the PDCCH candidate 1, performs a receiving and decoding operation on the received information, and performs CRC check. If the CRC succeeds, DCI is obtained. If the CRC fails, the terminal device continues to receive the PDCCH candidate 2. After receiving the PDCCH candidate 2, the terminal device combines the PDCCH candidate 2 and the PDCCH candidate 1, stores the combined information 1, performs a receiving and decoding operation on the information 1, and performs CRC check. If the CRC succeeds, DCI is obtained. If the CRC fails, the terminal device continues to receive PDCCH candidate 3; and then, after receiving the PDCCH candidate 3, the terminal device combines the PDCCH candidate 3 and the stored information 1, stores the combined information 2, performs a receiving and decoding operation on the information 2, and performs CRC check. If the CRC succeeds, DCI is obtained. If the CRC fails, the terminal device continues to receive the PDCCH candidate 4. After finally receiving the PDCCH candidate 4, the terminal device combines the PDCCH candidate 4 and the stored information 2 to obtain the combined information 3, performs a receiving and decoding operation on the information 3, and performs CRC check. If the CRC succeeds, DCI is obtained.

It may be learned that, in this embodiment of this application, a condition that needs to be met by a plurality of PDCCH candidates in a PDCCH candidate sequence is reported by the terminal device, or a condition that needs to be met by a plurality of PDCCH candidates is specified in a protocol. In addition, a PDCCH repetition transmission configuration of a base station is limited, and an implementation upper limit is set for PDCCH reception receiving of the UE, to reduce complexity of the UE. In addition, the terminal device may be supported to perform combination and decoding, and a combination gain brought by PDCCH repetition transmission is obtained.

### Embodiment 2

Embodiment 2 of this application mainly describes how to design a configuration that is related to PDCCH repetition transmission when UE does not support the PDCCH repetition transmission of TDM.

In an NR system and/or a future mobile communication system, capabilities of different terminal devices may be different. For example, some terminal devices have strong capabilities and can support a PDCCH repetition transmission in a TDM manner. Some terminal devices have weak capabilities and cannot support a PDCCH repetition transmission in a TDM manner. Therefore, when the terminal device does not support repetition transmission in the TDM, how to design a configuration that is related to PDCCH repetition transmission needs to be considered.

It should be understood that, in actual application, Embodiment 2 of this application may be implemented independently, or may be implemented together with the foregoing Embodiment 1.

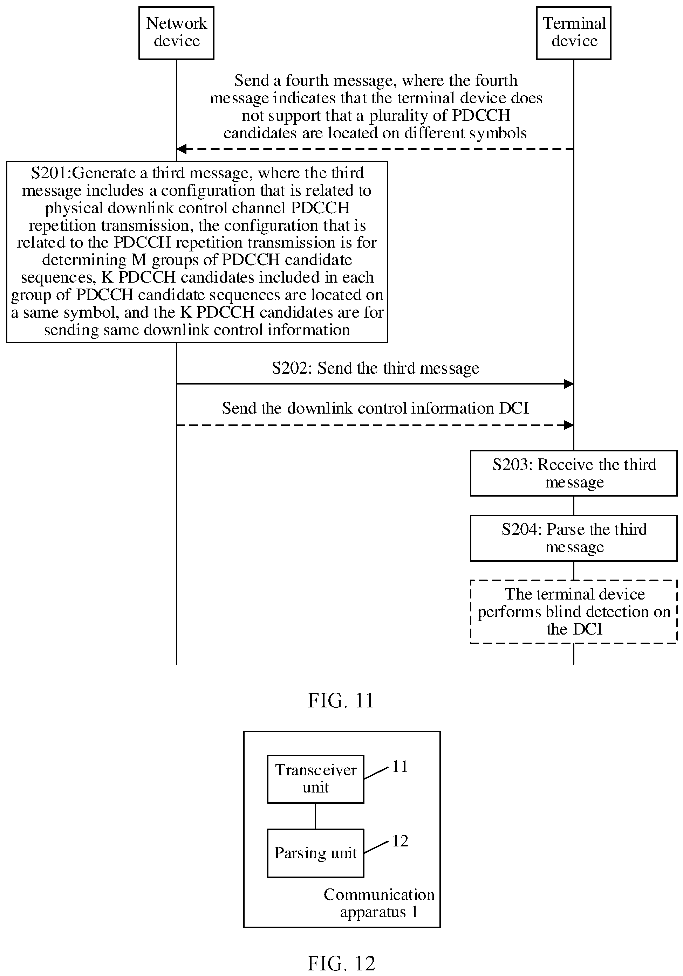

FIG. 11 is another schematic flowchart of a PDCCH repetition transmission configuration method according to an embodiment of this application. As shown in FIG. 11, the PDCCH repetition transmission configuration method includes but is not limited to the following steps:

S201: A network device generates a third message. The third message includes a configuration that is related to physical downlink control channel PDCCH repetition transmission, and the configuration that is related to the PDCCH repetition transmission is for determining M groups of PDCCH candidate sequences. K PDCCH candidates included in each group of PDCCH candidate sequences are located on a same symbol, and the K PDCCH candidates are for sending same downlink control information.

S202: The network device sends the third message.

Optionally, the network device generates the third message. The third message includes the configuration that is related to the PDCCH repetition transmission. The configuration that is related to the PDCCH repetition transmission may be implemented by using CORESET configuration information and search space set configuration information. In other words, the configuration that is related to the PDCCH repetition transmission is carried in the CORESET configuration information and the search space set configuration information. The configuration that is related to the PDCCH repetition transmission may alternatively be indicated by using new signaling. The configuration that is related to the PDCCH repetition transmission is for determining the M groups of PDCCH candidate sequences. Each group of PDCCH candidate sequences includes the K PDCCH candidates, and the K PDCCH candidates are for sending the same downlink control information. In other words, the K PDCCH candidates either send the same downlink control information or do not send downlink control information. M is a positive integer, and K is an integer greater than 1. The K PDCCH candidates included in each group of PDCCH candidate sequences are located on a same symbol. In other words, the K PDCCH candidates in the group of PDCCH candidate sequences are simultaneously transmitted. In other words, a group of PDCCH candidates in the PDCCH candidate sequences for repetition transmitting appear on a same OFDM symbol.

It should be understood that one PDCCH candidate occupies one or more symbols, and K PDCCH candidates included in each group of PDCCH candidate sequences are located on the same symbol, which means that the K PDCCH candidates occupy the same quantity of symbols. In addition, positions of symbols occupied by the K PDCCH candidates are also the same. For example, K is equal to 2, one PDCCH candidate occupies three symbols, and indexes of symbols occupied by the two PDCCH candidates are the same. For example, indexes of symbols occupied by the two PDCCH candidates are 3, 4, and 5.

It should be further understood that the "symbol" mentioned in this embodiment of this application may be an orthogonal frequency division multiplexing (orthogonal frequency division multiplexing, OFDM) symbol.

Optionally, before step S201, the PDCCH repetition transmission configuration method further includes: The fourth message is for indicating that the terminal device does not support a plurality of PDCCH candidates being located on different symbols. In other words, the fourth message indicates that the terminal device does not support the PDCCH repetition transmission in the TDM manner. After receiving the fourth message, the network device generates the third message based on an indication of the fourth message.

Optionally, after step S202, the method for configuring repetition PDCCH transmission further includes: The network device sends DCI. It should be understood that the network device sends the DCI based on the configuration that is related to the PDCCH repetition transmission in the third message.

S203: The terminal device receives the third message.

S204. The terminal device parses the third message.

Optionally, the terminal device receives the third message, parses the third message, to obtain the configuration that is related to the PDCCH repetition transmission included in the third message, and then may determine the M groups of PDCCH candidate sequences based on the configuration that is related to the PDCCH repetition transmission. K PDCCH candidates included in each group of PDCCH candidate sequences are located on the same symbol, and the K PDCCH candidates are for sending same downlink control information. In other words, the PDCCH repetition transmission configured by the network device for the terminal device is not in a TDM manner.

Optionally, after step S204, the PDCCH repetition transmission configuration method further includes: The terminal device performs blind detection on the DCI. Because the K PDCCH candidates included in each group of PDCCH candidate sequences are located on the same symbol, when performing blind detection on the DCI, the terminal device may separately decode a plurality of simultaneously received PDCCH candidates, or may perform combination and decoding on a plurality of PDCCH candidates that are simultaneously received. This is because the plurality of PDCCH candidates are simultaneously sent, which means that the terminal device may also simultaneously receive the PDCCH candidates, and no additional storage space is needed.

It may be learned that in this embodiment of this application, a TDM manner cannot be used for PDCCH repetition transmission that is reported by the terminal device and that is not supported in the TDM manner, or, according to a protocol, PDCCH repetition transmission that is configured by a terminal device and that has a weak capability. In other words, a group of PDCCH candidates in the PDCCH candidate sequences for repetition transmission is not allowed to appear on different OFDM symbols. The terminal device with a weak capability in a system can be compatible, the PDCCH repetition transmission configuration method may be improved, and a combination gain brought by the PDCCH repetition transmission may be obtained.

To better understand the foregoing Embodiment 1 and Embodiment 2, the following describes the solutions described in Embodiment 1 and Embodiment 2 with reference to an example.

In an example, the PDCCH repetition transmission configuration method includes:
S1: UE reports a capability that is related to PDCCH repetition transmission. The capability that is related to the PDCCH repetition transmission includes that the UE supports the PDCCH repetition transmission of the TDM or that the UE does not support the PDCCH repetition transmission of the TDM. If the capability that is related to the PDCCH repetition transmission is that the UE supports the PDCCH repetition transmission of the TDM, the capability may be further refined into any one of the following: A time interval between a plurality of PDCCH candidates is a first value, a size of a time window is a first value, a quantity of CCEs corresponding to each group of PDCCH candidate sequences is a second value, a value of M (or a quantity of groups of PDCCH candidate sequences) is a third value, a total quantity of CCEs corresponding to a plurality of groups of PDCCH candidate sequences is a fourth value, a quantity of groups of PDCCH candidate sequences located in a same slot is a fifth value, and a quantity of groups of PDCCH candidate sequences that simultaneously occupy a storage resource is a sixth value.
S2: If the capability that is related to the PDCCH repetition transmission is that the UE does not support the PDCCH repetition transmission of the TDM, the base station generates and sends a third message. The third message includes the configuration that is related to PDCCH repetition transmission, and the configuration that is related to the PDCCH repetition transmission is for determining M groups of PDCCH candidate sequences. K PDCCH candidates included in each group of PDCCH candidate sequences are located on a same symbol, and the K PDCCH candidates are for sending same downlink control information.
S3: If the capability that is related to the PDCCH repetition transmission is that the UE supports the PDCCH repetition transmission of the TDM, the base station generates a first message based on the capability (referred to to a further detailed capability herein) that is related to the PDCCH repetition transmission and that is reported by the UE, and send the first message. The first message includes a configuration that is related to PDCCH repetition transmission, the configuration is related to the PDCCH repetition transmission is for determining M groups of PDCCH candidate sequences, each group of PDCCH candidate sequences includes K PDCCH candidates, the K PDCCH candidates are for sending same downlink control information, the K PDCCH candidates included in each group of PDCCH candidate sequences are separately located on different symbols, and a PDCCH candidate in the M groups of PDCCH candidate sequences meets a first condition.
S4: The UE receives the first message or the third message.
S5: The UE parses the first message or the third message, and determines whether the configuration that is related to the PDCCH repetition transmission in the first message or the third message meets a protocol specification or is consistent with the capability reported by the UE. If the configuration that is related to the PDCCH repetition transmission and that is configured by the base station meets the protocol specification or is consistent with the capability reported by the UE, the UE performs combination and decoding on all PDCCH candidates included in each group of PDCCH candidate sequences in the M groups of PDCCH candidate sequences. If the configuration that is related to the PDCCH repetition transmission and that is configured by the base station does not comply with the protocol specification or does not meet the capability reported by the UE, the UE performs independent decoding on all PDCCH candidates in the M groups of PDCCH candidate sequences.

Example 1: It is assumed that the UE reports that the PDCCH repetition transmission of the TDM is not supported. When the base station performs PDCCH repetition transmission configuration of a non-TDM (in other words, K PDCCH candidates included in each group of PDCCH candidate sequences are located on the same symbol), which is consistent with a capability of the UE, and the UE can perform combination and decoding. When the base station performs PDCCH repetition transmission configuration of TDM (in other words, K PDCCH candidates included in each group of PDCCH candidate sequences are separately located on different symbols), which does not meet a capability of the UE, and the UE can perform independent decoding only for each PDCCH candidate.

Example 2: If the UE reports that the PDCCH repetition transmission of the TDM is supported, but only TDM with a time interval of T symbols is supported (in other words, the time interval between a plurality of PDCCH candidates is T, in other words, the first value is T.). When the base station performs TDM configuration of the PDCCH repetition transmission with a time interval less than or equal to T symbols (in other words, a time interval between K PDCCH candidates in each group of PDCCH candidate sequences is less than or equal to T symbols), which is consistent with a capability of the UE, and the UE can perform combination and decoding. When the base station performs TDM configuration of the PDCCH repetition transmission with a time interval greater than T symbols (in other words, a time interval between K PDCCH candidates in each group of PDCCH candidate sequences is greater than T symbols), which does not meet a capability of the UE, and the UE can only perform independent decoding for each PDCCH candidate.

Example 3: If the UE reports that the PDCCH repetition transmission of the TDM is supported, but only N PDCCH candidates are supported to be stored. When the TDM configuration of PDCCH repetition transmission performed by the base station requires that a maximum quantity of PDCCH candidates stored in the UE be less than or equal to N, which is consistent with a capability of the UE, and the UE may perform combination and decoding. When the TDM configuration of PDCCH repetition transmission performed by the base station requires that the maximum quantity of PDCCH candidates stored by the UE be greater than N, which does not meet a capability of the UE. In this case, one manner is that the UE performs independent decoding for each PDCCH candidate. In another manner, the UE performs combination and decoding on the first N PDCCH candidates that can be stored, and performs independent decoding on the remaining PDCCH candidates.

Example 4: If the UE reports that the PDCCH repetition transmission of the TDM is supported any time interval is supported, (in other words, the time interval between the plurality of PDCCH candidates is not limited, and may be any value, in other words, the first value is positive infinity), the base station may perform any configuration, which is consistent with a capability of the UE, and the UE may perform combination and decoding.

The foregoing content describes in detail the methods provided in this application. To better implement the foregoing solutions in embodiments of this application, embodiments of this application further provide corresponding apparatuses or devices.

In this embodiment of this application, functional modules may be divided on the terminal device and the network device based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used. The following describes in detail communication apparatuses in embodiments of this application with reference to FIG. 12 to FIG. 14. The communication apparatus is a terminal device, a network device, or an apparatus in the terminal device or the network device.

When an integrated unit is used, FIG. 12 is a schematic diagram of a structure of a communication apparatus 1 according to an embodiment of this application. The communication apparatus 1 may be a terminal device, or a chip or a circuit disposed in the terminal device. As shown in FIG. 12, the communication apparatus 1 may include: a transceiver unit 11 and a parsing unit 12.

In a design, the transceiver unit 11 is configured to receive a first message. The first message includes a configuration that is related to PDCCH repetition transmission, the configuration that is related to the PDCCH repetition transmission is for determining M groups of PDCCH candidate sequences, each group of PDCCH candidate sequences includes K PDCCH candidates, the K PDCCH candidates are for sending same downlink control information, the K PDCCH candidates included in each group of PDCCH candidate sequences are separately located on different symbols, M is a positive integer, K is an integer greater than 1, a PDCCH candidate in the M groups of PDCCH candidate sequences meets a first condition, and the parsing unit 12 is configured to parse the first message.

Optionally, the first condition includes: A time interval between the K PDCCH candidates in each group of PDCCH candidate sequences is less than or equal to a first value.

Optionally, the time interval between the K PDCCH candidates in each group of PDCCH candidate sequences is a time interval between a start symbol of a PDCCH candidate transmitted for the 1^{st} time in the K PDCCH candidates and an end symbol of a PDCCH candidate transmitted for the K^{th} time, and one PDCCH candidate occupies one or more symbols.

Optionally, the time interval between the K PDCCH candidates in each group of PDCCH candidate sequences is a time interval between a start symbol of a PDCCH candidate transmitted for the i^{th} time in the K PDCCH candidates and an end symbol of a PDCCH candidate transmitted for the (i+1)^{th} time, a value range of i is an interval [1, K-1], and one PDCCH candidate occupies one or more symbols.

Optionally, the time interval between the K PDCCH candidates in each group of PDCCH candidate sequences is a time interval between a start symbol of a PDCCH candidate transmitted for the 1^{st} time in the K PDCCH candidates and a start symbol of a PDCCH candidate transmitted for the K^{th} time, and one PDCCH candidate occupies one or more symbols.

Optionally, the time interval between the K PDCCH candidates in each group of PDCCH candidate sequences is a time interval between a start symbol of a PDCCH candidate transmitted for the i^{th} time in the K PDCCH candidates and a start symbol of a PDCCH candidate transmitted for the (i+1)^{th} time, a value range of i is an interval [1, K-1], and one PDCCH candidate occupies one or more symbols.

Optionally, the first condition includes: the K PDCCH candidates in each group of PDCCH candidate sequences are located in one time window, a size of the time window is equal to the first value, and a start symbol of the time window is preset.

Optionally, the first condition includes: M is less than or equal to a third value; or, a total quantity of CCEs corresponding to the M groups of PDCCH candidate sequences is less than or equal to a fourth value, and one PDCCH candidate includes one or more CCEs.

Optionally, the first condition includes: there are N groups of PDCCH candidate sequences that are located in a same slot and that are in the M groups of PDCCH candidate sequences, N is a positive integer, N is less than or equal to M, and N is less than or equal to the fifth value.

Optionally, the first condition includes: there are O groups of PDCCH candidate sequences that simultaneously occupy a storage resource and that are in the M groups of PDCCH candidate sequences, O is a positive integer, O is less than or equal to M, and O is less than or equal to a sixth value.

Optionally, the transceiver unit 11 is further configured to send a second message. The second message includes a capability that is supported by the communication apparatus 1 and that is related to the PDCCH repetition transmission, and the capability that is supported by the communication apparatus 1 and that is related to the PDCCH repetition transmission is for determining the first condition.

Optionally, the capability that is supported by the communication apparatus 1 and that is related to the PDCCH repetition transmission includes one or more of the following: A time interval between a plurality of PDCCH candidates is a first value, a size of a time window is a first value, a quantity of CCEs corresponding to each group of PDCCH candidate sequences is a second value, a value of M is a third value, a total quantity of CCEs corresponding to a plurality of groups of PDCCH candidate sequences is a fourth value, a quantity of groups of PDCCH candidate sequences located in a same slot is a fifth value, and a quantity of groups of PDCCH candidate sequences that simultaneously occupy a storage resource is a sixth value.

The parsing unit 12 may also be referred to as a processing unit.

It should be understood that in this design, the communication apparatus 1 may correspondingly perform the foregoing Embodiment 1, and the foregoing operations or functions of the units in the communication apparatus 1 are separately used to implement corresponding operations of the terminal device in the foregoing Embodiment 1. For technical effects of the units, refer to the technical effects in the foregoing Embodiment 1. For brevity, details are not described herein again.

In another design, the transceiver unit 11 is configured to receive a third message. The third message includes a configuration that is related to PDCCH repetition transmission, and the configuration that is related to the PDCCH repetition transmission is for determining M groups of PDCCH candidate sequences. K PDCCH candidates included in each group of PDCCH candidate sequences are located on a same symbol, and the K PDCCH candidates are for sending same downlink control information; and the parsing unit 12 is configured to parse the third message.

Optionally, the transceiver unit 11 is further configured to send a fourth message. The fourth message is for indicating that a communication apparatus 1 does not support a plurality of PDCCH candidates being located on different symbols.

The parsing unit 12 may also be referred to as a processing unit.

It should be understood that in this design, the communication apparatus 1 may correspondingly perform the foregoing Embodiment 2, and the foregoing operations or functions of the units in the communication apparatus 1 are separately used to implement corresponding operations of the terminal device in the foregoing Embodiment 2. For technical effects of the units, refer to the technical effects in Embodiment 2. For brevity, details are not described herein again.

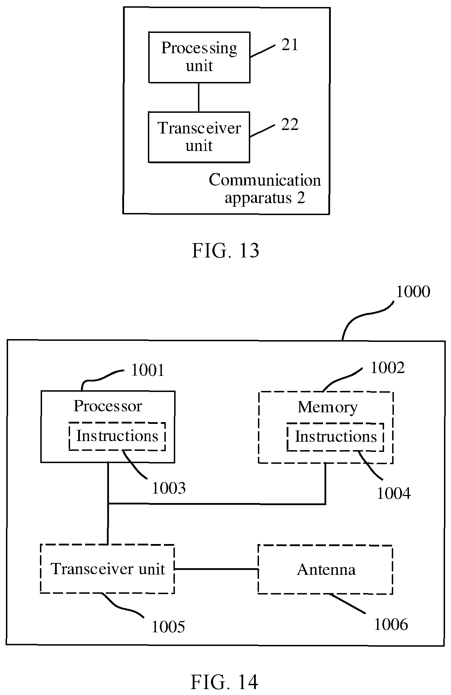

FIG. 13 is a schematic diagram of a structure of a communication apparatus 2 according to an embodiment of this application. The communication apparatus 2 may be a network device, or a chip or a circuit disposed in the network device. As shown in FIG. 13, the communication apparatus may include: a processing unit 21 and a transceiver unit 22.

In a design, the processing unit 21 is configured to generate a first message. The first message includes a configuration that is related to PDCCH repetition transmission, the configuration that is related to the PDCCH repetition transmission is for determining M groups of PDCCH candidate sequences, each group of PDCCH candidate sequences includes K PDCCH candidates, the K PDCCH candidates are for sending same downlink control information, the K PDCCH candidates included in each group of PDCCH candidate sequences are separately located on different symbols, M is a positive integer, K is an integer greater than 1, a PDCCH candidate in the M groups of PDCCH candidate sequences meets a first condition, and the transceiver unit 22 is configured to send the first message.

Optionally, the first condition includes: A time interval between the K PDCCH candidates in each group of PDCCH candidate sequences is less than or equal to a first value.

Optionally, the time interval between the K PDCCH candidates in each group of PDCCH candidate sequences is a time interval between a start symbol of a PDCCH candidate transmitted for the 1^{st} time in the K PDCCH candidates and an end symbol of a PDCCH candidate transmitted for the K^{th} time, and one PDCCH candidate occupies one or more symbols.

Optionally, the time interval between the K PDCCH candidates in each group of PDCCH candidate sequences is a time interval between a start symbol of a PDCCH candidate transmitted for the i^{th} time in the K PDCCH candidates and an end symbol of a PDCCH candidate transmitted for the (i+1)^{th} time, a value range of i is an interval [1, K-1], and one PDCCH candidate occupies one or more symbols.

Optionally, the time interval between the K PDCCH candidates in each group of PDCCH candidate sequences is a time interval between a start symbol of a PDCCH candidate transmitted for the 1^{st} time in the K PDCCH candidates and a start symbol of a PDCCH candidate transmitted for the K^{th} time, and one PDCCH candidate occupies one or more symbols.

Optionally, the time interval between the K PDCCH candidates in each group of PDCCH candidate sequences is a time interval between a start symbol of a PDCCH candidate transmitted for the i^{th} time in the K PDCCH candidates and a start symbol of a PDCCH candidate transmitted for the (i+1)^{th} time, a value range of i is an interval [1, K-1], and one PDCCH candidate occupies one or more symbols.

Optionally, the first condition includes: the K PDCCH candidates in each group of PDCCH candidate sequences are located in one time window, a size of the time window is equal to the first value, and a start symbol of the time window is preset.

Optionally, the first condition includes: M is less than or equal to a third value; or, a total quantity of CCEs corresponding to the M groups of PDCCH candidate sequences is less than or equal to a fourth value, and one PDCCH candidate includes one or more CCEs.

Optionally, the first condition includes: there are N groups of PDCCH candidate sequences that are located in a same slot and that are in the M groups of PDCCH candidate sequences, N is a positive integer, N is less than or equal to M, and N is less than or equal to the fifth value.

Optionally, the first condition includes: there are O groups of PDCCH candidate sequences that simultaneously occupy a storage resource and that are in the M groups of PDCCH candidate sequences, O is a positive integer, O is less than or equal to M, and O is less than or equal to a sixth value.

Optionally, the transceiver unit 22 is further configured to receive a second message. The second message includes a capability that is supported by the terminal device and that is related to the PDCCH repetition transmission, and the capability that is supported by the terminal device and that is related to the PDCCH repetition transmission is for determining the first condition.

Optionally, the capability that is supported by the terminal device and that is related to the PDCCH repetition transmission includes one or more of the following: A time interval between a plurality of PDCCH candidates is a first value, a size of a time window is a first value, a quantity of CCEs corresponding to each group of PDCCH candidate sequences is a second value, a value of M is a third value, a total quantity of CCEs corresponding to a plurality of groups of PDCCH candidate sequences is a fourth value, a quantity of groups of PDCCH candidate sequences located in a same slot is a fifth value, and a quantity of groups of PDCCH candidate sequences that simultaneously occupy a storage resource is a sixth value.

It should be understood that in this design, the communication apparatus 2 may correspondingly perform the foregoing Embodiment 1, and the foregoing operations or functions of the units in the communication apparatus 2 are separately used to implement corresponding operations of the network device in the foregoing Embodiment 1. For technical effects of the units, refer to technical effects in the foregoing Embodiment 1. For brevity, details are not described herein again.

In another design, the processing unit 21 is configured to generate a third message. The third message includes a configuration that is related to PDCCH repetition transmission, and the configuration that is related to the PDCCH repetition transmission is for determining M groups of PDCCH candidate sequences. K PDCCH candidates included in each group of PDCCH candidate sequences are located on a same symbol, and the K PDCCH candidates are for sending same downlink control information; and the transceiver unit 22 is configured to send the third message.

Optionally, the transceiver unit 22 is further configured to receive a fourth message. The fourth message is for indicating that the terminal device does not support a plurality of PDCCH candidates being located on different symbols.

It should be understood that in this design, the communication apparatus 2 may correspondingly perform the foregoing Embodiment 2, and the foregoing operations or functions of the units in the communication apparatus 2 are separately used to implement corresponding operations of the network device in the foregoing Embodiment 2. For technical effects of the units, refer to the technical effects in the foregoing Embodiment 2. For brevity, details are not described herein again.

FIG. 14 is a schematic diagram of a structure of a communication apparatus 1000 according to an embodiment of this application. As shown in FIG. 14, the communication apparatus 1000 provided in this embodiment of this application may be configured to implement the method described in the foregoing method embodiment. For details, refer to the descriptions in the foregoing method embodiment. The communication apparatus 1000 may be any one of the foregoing terminal device and the foregoing network device.

The communication apparatus 1000 includes one or more processors 1001. The processor 1001 may be a general-purpose processor, a dedicated processor, or the like. For example, the processor may be a baseband processor or a central processing unit. The baseband processor may be configured to process a communication protocol and communication data. The central processing unit may be configured to control an apparatus (for example, UE, a base station, or a chip), executes a software program, and processes data of the software program. The apparatus may include a transceiver unit, configured to implement signal input (receiving) and output (sending). For example, the apparatus may be a chip, and the transceiver unit may be an input circuit and/or an output circuit of the chip, or a communication interface. The chip may be used in a communication device (for example, UE) or an access network device (for example, a base station). For another example, the apparatus may be a communication device (for example, UE) or an access network device (for example, a base station), and the transceiver unit may be a transceiver, a radio frequency chip, or the like.

The communication apparatus 1000 includes one or more processors 1001, and the one or more processors 1001 may implement the method of the terminal device or the network device in any one of the foregoing embodiments.

Optionally, in addition to implementing the method in any one of the foregoing embodiments, the processor 1001 may further implement another function.

Optionally, in a design, the processor 1001 may alternatively include instructions 1003, and the instructions may be run on the processor, so that the communication apparatus 1000 performs the method described in any one of the foregoing method embodiments.

In still another possible design, the communication apparatus 1000 may alternatively include a circuit, and the circuit may implement a function of the terminal device or the network device in any one of the foregoing method embodiments.

In still another possible design, the communication apparatus 1000 may include one or more memories 1002. The one or more memories 1002 store instructions 1004, and the instructions may be run on the processor, so that the communication apparatus 1000 performs the method described in any one of the foregoing method embodiments. Optionally, the memory may further store data. Optionally, the processor may also store instructions and/or data. For example, the one or more memories 1002 may store the PDCCH candidate described in the foregoing embodiment, or other information involved in the foregoing embodiment, or the like. The processor and the memory may be separately disposed, or may be integrated together.

In still another possible design, the communication apparatus 1000 may further include a transceiver unit 1005 and an antenna 1006, or include a communication interface. The transceiver unit 1005 may be referred to as a transceiver, a transceiver circuit, a transceiver, or the like, and is configured to implement a transceiver function of the apparatus by using the antenna 1006. The communication interface (not shown in the figure) may be used for communication between a core network device and an access network device, or between an access network device and an access network device. Optionally, the communication interface may be a wired communication interface, for example, an optical fiber communication interface.

The processor 1001 may be referred to as a processing unit, and controls an apparatus (for example, UE, a base station, or an AMF).

It should be understood that, the processor in embodiments of this application may be a central processing unit (Central Processing Unit, CPU), or may be another general purpose processor, a digital signal processor (digital signal processor, DSP), an application-specific integrated circuit (application specific integrated circuit, ASIC), a field programmable gate array (field-programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a restrictive description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired, for example, an optical fiber, or wireless, for example, infrared, radio, or microwave, manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid state drive.

An embodiment of this application further provides a computer program product. The computer program product includes computer program code. When the computer program code is run on a computer, the computer is enabled to perform the method steps of the terminal device described in the foregoing embodiments. Alternatively, when the computer program code is run on a computer, the computer is enabled to perform the method steps of the network device described in the foregoing embodiments.

An embodiment of this application further provides a computer-readable storage medium. The computer-readable storage medium stores program instructions. When the program instructions are run on a computer, the computer is enabled to perform the method steps of the terminal device described in the foregoing embodiments. Alternatively, when the computer program code is run on a computer, the computer is enabled to perform the method steps of the network device described in the foregoing embodiments.

An embodiment of this application further provides an apparatus, and the apparatus may be a chip. The chip includes a processor. The processor is configured to read and execute a computer program stored in the memory, to perform the method in any possible implementation of any one of the foregoing embodiments. Optionally, the chip further includes a memory, and the memory is connected to the processor by using a circuit or an electric wire. Further, optionally, the chip further includes a communication interface, and the processor is connected to the communication interface. The communication interface is configured to receive data and/or a signal that needs to be processed. The processor obtains the data and/or the signal from the communication interface, processes the data and/or the signal, and outputs a processing result by using the communication interface. The communication interface may be an input/output interface.

Optionally, the processor and the memory may be physically independent units, or the memory may be integrated with the processor.

In another embodiment of this application, a communication system is further provided. The communication system includes a terminal device and a network device. The terminal device and the network device are configured to perform the method in any one of the foregoing embodiments.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A physical downlink control channel, PDCCH, repetition transmission configuration method, performed by a communication apparatus, comprising:
receiving a first message, wherein the first message comprises a configuration that is related to PDCCH repetition transmission, the configuration that is related to the PDCCH repetition transmission is for determining M groups of PDCCH candidate sequences, each group of PDCCH candidate sequences comprises 2 PDCCH candidates, the 2 PDCCH candidates are for sending same downlink control information, the 2 PDCCH candidates comprised in each group of PDCCH candidate sequences are separately located on different symbols, M is a positive integer, wherein a PDCCH candidate in the M groups of PDCCH candidate sequences meets a first condition; and
parsing the first message;
**characterized in that**
before the receiving a first message, the method further comprises: sending a second message, wherein the second message comprises a capability that is supported by a terminal device and that is related to the PDCCH repetition transmission, and the capability that is supported by the terminal device and that is related to the PDCCH repetition transmission is for determining the first condition.

2. A physical downlink control channel, PDCCH, repetition transmission configuration method, performed by a communication apparatus, comprising:
generating a first message, wherein the first message comprises a configuration that is related to PDCCH repetition transmission, the configuration that is related to the PDCCH repetition transmission is for determining M groups of PDCCH candidate sequences, each group of PDCCH candidate sequences comprises 2 PDCCH candidates, the 2 PDCCH candidates are for sending same downlink control information, the 2 PDCCH candidates comprised in each group of PDCCH candidate sequences are separately located on different symbols, M is a positive integer, wherein
a PDCCH candidate in the M groups of PDCCH candidate sequences meets a first condition; and
sending the first message;
**characterized in that**
before the generating a first message, the method further comprises: receiving a second message, wherein the second message comprises a capability that is supported by a terminal device and that is related to the PDCCH repetition transmission, and the capability that is supported by the terminal device and that is related to the PDCCH repetition transmission is for determining the first condition.

3. The method according to claim 1 or 2, wherein the first condition comprises:
a time interval between the 2 PDCCH candidates in each group of PDCCH candidate sequences is less than 7 orthogonal frequency division multiplexing, OFDM, symbols.

4. The method according to claim 3, wherein the time interval between the 2 PDCCH candidates in each group of PDCCH candidate sequences is a time interval between a start symbol of a PDCCH candidate transmitted for the 1^{st} time in the 2 PDCCH candidates and an end symbol of a PDCCH candidate transmitted for the 2^{nd} time, and one PDCCH candidate occupies one or more symbols.

5. The method according to claim 1 or 2, wherein the first condition comprises:
M is less than or equal to a third value; or
a total quantity of control channel elements, CCEs, corresponding to the M groups of PDCCH candidate sequences is less than or equal to a fourth value, and one PDCCH candidate comprises one or more CCEs.

6. The method according to claim 5, wherein the total quantity of CCEs corresponding to the M groups of PDCCH candidate sequences is a sum of a quantity of CCEs corresponding to the first PDCCH candidate in each group of PDCCH candidate sequences in the M groups of PDCCH candidate sequences.

7. The method according to any one of claims 1 to 6, wherein the capability that is supported by the terminal device and that is related to the PDCCH repetition transmission comprises one or more of the following:
a time interval between a plurality of PDCCH candidates is a first value;
a size of a time window is the first value;
a quantity of CCEs corresponding to each group of PDCCH candidate sequences is a second value;
a value of M is a third value;
a total quantity of CCEs corresponding to a plurality of groups of PDCCH candidate sequences is a fourth value;
a quantity of groups of PDCCH candidate sequences located in a same slot is a fifth value; and
a quantity of groups of PDCCH candidate sequences that simultaneously occupy a storage resource is a sixth value.

8. A communication apparatus (1000), comprising means for performing the method according to any one of claims 1 to 7.

9. A computer program product comprising program instructions, wherein when the program instructions are run on a communication apparatus (1000), the apparatus (1000) is enabled to perform the method according to any one of claims 1 to 7.

10. A computer-readable storage medium, wherein the computer-readable storage medium stores program instructions, and when the program instructions are run, the method according to any one of claims 1 to 7 is performed.

## Patentansprüche

1. Konfigurationsverfahren für eine Wiederholungsübertragung auf einem physikalische Downlink-Steuerkanal (PDCCH), das von einer Kommunikationsvorrichtung durchgeführt wird und Folgendes umfasst:
Empfangen einer ersten Nachricht, wobei die erste Nachricht eine mit der PDCCH-Wiederholungsübertragung verbundene Konfiguration umfasst, die mit der PDCCH-Wiederholungsübertragung verbundene Konfiguration zum Bestimmen von M Gruppen von PDCCH-Kandidatensequenzen dient, jede Gruppe von PDCCH-Kandidatensequenzen 2 PDCCH-Kandidaten umfasst, die 2 PDCCH-Kandidaten zum Senden derselben Downlink-Steuerinformationen dienen, die in jeder Gruppe von PDCCH-Kandidatensequenzen enthaltenen 2 PDCCH-Kandidaten separat auf verschiedenen Symbolen angeordnet sind, M eine positive ganze Zahl ist, wobei ein PDCCH-Kandidat aus den M Gruppen von PDCCH-Kandidatensequenzen eine erste Bedingung erfüllt; und
Parsen der ersten Nachricht;
**dadurch gekennzeichnet, dass**
vor dem Empfangen einer ersten Nachricht das Verfahren ferner Folgendes umfasst: Senden einer zweiten Nachricht, wobei die zweite Nachricht eine von einer Endgerätevorrichtung unterstützte und mit der PDCCH-Wiederholungsübertragung verbundene Fähigkeit umfasst und die von der Endgerätevorrichtung unterstützte und mit der PDCCH-Wiederholungsübertragung verbundene Fähigkeit zum Bestimmen der ersten Bedingung dient.

2. Konfigurationsverfahren für eine Wiederholungsübertragung auf einem physikalischen Downlink-Steuerkanal (PDCCH), das von einer Kommunikationsvorrichtung durchgeführt wird und Folgendes umfasst:
Generieren einer ersten Nachricht, wobei die erste Nachricht eine mit der PDCCH-Wiederholungsübertragung verbundene Konfiguration umfasst, die mit der PDCCH-Wiederholungsübertragung verbundene Konfiguration zum Bestimmen von M Gruppen von PDCCH-Kandidatensequenzen dient, jede Gruppe von PDCCH-Kandidatensequenzen 2 PDCCH-Kandidaten umfasst, die 2 PDCCH-Kandidaten zum Senden derselben Downlink-Steuerinformationen dienen, die in jeder Gruppe von PDCCH-Kandidatensequenzen enthaltenen 2 PDCCH-Kandidaten separat auf verschiedenen Symbolen angeordnet sind, M eine positive ganze Zahl ist, wobei
ein PDCCH-Kandidat in den M Gruppen von PDCCH-Kandidatensequenzen eine erste Bedingung erfüllt; und
Senden der ersten Nachricht;
**dadurch gekennzeichnet, dass**
vor dem Generieren einer ersten Nachricht das Verfahren ferner Folgendes umfasst: Empfangen einer zweiten Nachricht, wobei die zweite Nachricht eine von einer Endgerätevorrichtung unterstützte und mit der PDCCH-Wiederholungsübertragung verbundene Fähigkeit umfasst und die von der Endgerätevorrichtung unterstützte und mit der PDCCH-Wiederholungsübertragung verbundene Fähigkeit zum Bestimmen der ersten Bedingung dient.

3. Verfahren nach Anspruch 1 oder 2, wobei die erste Bedingung Folgendes umfasst:
ein Zeitintervall zwischen den 2 PDCCH-Kandidaten in jeder Gruppe von PDCCH-Kandidatensequenzen beträgt weniger als 7 Symbole in einem orthogonalen Frequenzmultiplexverfahren (OFDM).

4. Verfahren nach Anspruch 3, wobei das Zeitintervall zwischen den 2 PDCCH-Kandidaten in jeder Gruppe von PDCCH-Kandidatensequenzen ein Zeitintervall zwischen einem Startsymbol eines zum 1. Mal übertragenen PDCCH-Kandidaten aus den 2 PDCCH-Kandidaten und einem Endsymbol eines zum 2. Mal übertragenen PDCCH-Kandidaten ist und ein PDCCH-Kandidat ein oder mehrere Symbole belegt.

5. Verfahren nach Anspruch 1 oder 2, wobei die erste Bedingung Folgendes umfasst:
M ist kleiner oder gleich einem dritten Wert; oder
eine Gesamtanzahl an Steuerkanalelementen (CCEs), die den M Gruppen von PDCCH-Kandidatensequenzen entsprechen, ist kleiner oder gleich einem vierten Wert und ein PDCCH-Kandidat umfasst ein oder mehrere CCEs.

6. Verfahren nach Anspruch 5, wobei die Gesamtanzahl der CCEs, die den M Gruppen von PDCCH-Kandidatensequenzen entsprechen, eine Summe einer Anzahl von CCEs ist, die dem ersten PDCCH-Kandidaten aus jeder Gruppe von PDCCH-Kandidatensequenzen in den M Gruppen von PDCCH-Kandidatensequenzen entspricht.

7. Verfahren nach einem der Ansprüche 1 bis 6, wobei die von der Endgerätevorrichtung unterstützte und mit der PDCCH-Wiederholungsübertragung verbundene Fähigkeit eine oder mehrere des Folgenden umfasst:
ein Zeitintervall zwischen einer Vielzahl PDCCH-Kandidaten ist ein erster Wert;
die Größe eines Zeitfensters ist der erste Wert;
eine Anzahl von CCEs, die jeder Gruppe von PDCCH-Kandidatensequenzen entspricht, ist ein zweiter Wert;
ein Wert von M ist ein dritter Wert;
eine Gesamtanzahl von CCEs, die einer Vielzahl von Gruppen von PDCCH-Kandidatensequenzen entspricht, ist ein vierter Wert;
eine Anzahl von Gruppen von PDCCH-Kandidatensequenzen, die sich in einem gleichen Zeitschlitz befinden, ist ein fünfter Wert; und
eine Anzahl der Gruppen von PDCCH-Kandidatensequenzen, die gleichzeitig eine Speicherressource belegen, ist ein sechster Wert.

8. Kommunikationsvorrichtung (1000), umfassend Mittel zum Durchführen des Verfahrens nach einem der Ansprüche 1 bis 7.

9. Computerprogrammprodukt, umfassend Programmanweisungen, wobei, wenn die Programmanweisungen auf einer Kommunikationsvorrichtung (1000) ausgeführt werden, die Vorrichtung (1000) in die Lage versetzt wird, das Verfahren nach einem der Ansprüche 1 bis 7 durchzuführen.

10. Computerlesbares Speichermedium, wobei in dem computerlesbaren Speichermedium Programmanweisungen abgespeichert sind und, wenn die Programmanweisungen ausgeführt werden, das Verfahren gemäß einem der Ansprüche 1 bis 7 durchgeführt wird.

## Revendications

1. Procédé de configuration de transmission de répétition d'un canal de commande de liaison descendante physique, PDCCH, réalisé par un appareil de communication, comprenant :
la réception d'un premier message, dans lequel le premier message comprend une configuration qui est liée à la transmission de répétition PDCCH, la configuration qui est liée à la transmission de répétition PDCCH sert à déterminer M groupes de séquences candidates PDCCH, chaque groupe de séquences candidates PDCCH comprend 2 candidats PDCCH, les 2 candidats PDCCH servent à envoyer les mêmes informations de commande de liaison descendante, les 2 candidats PDCCH compris dans chaque groupe de séquences candidates PDCCH sont situés séparément sur des symboles différents, M est un entier positif, dans lequel un candidat PDCCH dans les M groupes de séquences candidates PDCCH remplit une première condition ; et
l'analyse du premier message ;
**caractérisé en ce que**
avant la réception d'un premier message, le procédé comprend également : l'envoi d'un second message, dans lequel le second message comprend une capacité qui est prise en charge par un dispositif terminal et qui est liée à la transmission de répétition PDCCH, et la capacité qui est prise en charge par le dispositif terminal et qui est liée à la transmission de répétition PDCCH sert à déterminer la première condition.

2. Procédé de configuration de transmission de répétition d'un canal de commande de liaison descendante physique, PDCCH, réalisé par un appareil de communication, comprenant :
la génération d'un premier message, dans lequel le premier message comprend une configuration qui est liée à la transmission de répétition PDCCH, la configuration qui est liée à la transmission de répétition PDCCH sert à déterminer M groupes de séquences candidates PDCCH, chaque groupe de séquences candidates PDCCH comprend 2 candidats PDCCH, les 2 candidats PDCCH servent à envoyer les mêmes informations de commande de liaison descendante, les 2 candidats PDCCH compris dans chaque groupe de séquences candidates PDCCH sont situés séparément sur des symboles différents, M est un entier positif ; dans lequel
un candidat PDCCH dans les M groupes de séquences candidates PDCCH remplit une première condition ; et
l'envoi du premier message ;
**caractérisé en ce que**
avant la génération d'un premier message, le procédé comprend également : l'envoi d'un second message, dans lequel le second message comprend une capacité qui est prise en charge par un dispositif terminal et qui est liée à la transmission de répétition PDCCH, et la capacité qui est prise en charge par le dispositif terminal et qui est liée à la transmission de répétition PDCCH sert à déterminer la première condition.

3. Procédé selon la revendication 1 ou 2, dans lequel la première condition comprend :
un intervalle de temps entre les 2 candidats PDCCH dans chaque groupe de séquences candidates PDCCH est inférieur à 7 symboles de multiplexage par répartition orthogonale de la fréquence, OFDM.

4. Procédé selon la revendication 3, dans lequel l'intervalle de temps entre les 2 candidats PDCCH dans chaque groupe de séquences candidates PDCCH est un intervalle de temps entre un symbole de début d'un candidat PDCCH transmis pour la j^{re} fois dans les 2 candidats PDCCH et un symbole de fin d'un candidat PDCCH transmis pour la 2^{e} fois, et un candidat PDCCH occupe un ou plusieurs symboles.

5. Procédé selon la revendication 1 ou 2, dans lequel la première condition comprend :
M est inférieur ou égal à une troisième valeur ; ou
une quantité totale d'éléments de canal de commande, CCE, correspondant aux M groupes de séquences candidates PDCCH est inférieure ou égale à une quatrième valeur, et un candidat PDCCH comprend un ou plusieurs CCE.

6. Procédé selon la revendication 5, dans lequel la quantité totale de CCE correspondant aux M groupes de séquences candidates PDCCH est une somme d'une quantité de CCE correspondant au premier candidat PDCCH dans chaque groupe de séquences candidates PDCCH dans les M groupes de séquences candidates PDCCH.

7. Procédé selon l'une quelconque des revendications 1 à 6, dans lequel la capacité qui est prise en charge par le terminal et qui est liée à la transmission de répétition PDCCH comprend un ou plusieurs des éléments suivants :
un intervalle de temps entre une pluralité de candidats PDCCH est une première valeur ;
une taille d'une fenêtre temporelle est la première valeur ;
une quantité de CCE correspondant à chaque groupe de séquences candidates PDCCH est une deuxième valeur ;
une valeur de M est une troisième valeur ;
une quantité totale de CCE correspondant à une pluralité de groupes de séquences candidates PDCCH est une quatrième valeur ;
une quantité de groupes de séquences candidates PDCCH située dans un même emplacement est une cinquième valeur ; et
une quantité de groupes de séquences candidates PDCCH qui occupent simultanément une ressource de stockage est une sixième valeur.

8. Appareil de communication (1000), comprenant des moyens pour réaliser le procédé selon l'une quelconque des revendications 1 à 7.

9. Produit de programme informatique comprenant des instructions de programme, dans lequel lorsque les instructions de programme sont exécutées sur un appareil de communication (1000), l'appareil (1000) est activé pour réaliser le procédé selon l'une quelconque des revendications 1 à 7.

10. Support de stockage lisible par ordinateur, dans lequel le support de stockage lisible par ordinateur stocke des instructions de programme, et lorsque les instructions de programme sont exécutées, le procédé selon l'une quelconque des revendications 1 à 7 est réalisé.
